# EUROPEAN PATENT SPECIFICATION

(11) **EP 4 601 464 B1**
(45) Date of publication and mention of the grant of the patent: **30.09.2026**
(21) Application number: 23786619.9
(22) Date of filing: 13.10.2023
(51) Int. Cl.: A01M 1/02, A01M 31/00, G01V 3/08, G01R 29/12

(54) **SYSTEM AND METHOD FOR DETECTION OF INSECTS**
SYSTEM UND VERFAHREN ZUM NACHWEIS VON INSEKTEN
SYSTÈME ET PROCÉDÉ DE DÉTECTION D'INSECTES

(30) Priority: 13.10.2022 EP 22201374; 26.05.2023 EP 23175578
(43) Date of publication of application: 20.08.2025
(73) Proprietor: FaunaPhotonics Agriculture & Environmental A/S, 2150 Nordhavn (DK)
(72) Inventor: KREBS, Niels, 2450 Copenhagen SV (DK); LUCIANO, Rubens Monteiro, 2450 Copenhagen SV (DK); ELBÆK, Frederik, 2450 Copenhagen SV (DK)
(74) Representative: Guardian IP Consulting I/S
(86) International application number: PCT/EP2023/078552
(87) International publication number: WO 2024/079343

(56) References cited:
- WO-A1-2021/138586
- US-A1- 2019 124 914
- US-B2- 10 261 184

## Description

### Technical field

The present disclosure relates to a system and method for detection of insects.

### Background

It is generally desirable to accurately detect insect activity within an area, for example within a geographic area such as an agricultural area, a forestry area or another geographic area of interest. For this reason various insect detection methods and devices have been developed. However, many of these methods and devices either require capture of the insects or suffer from low resolution from free-flying insects.

It is known that flying insects may produce a signal in an electric field antenna as shown by Koemel and Callahan, Ann. Entomol. Soc. Am. 87(5): 491-497 (1994), when they measured caged insects in flight. The insects were placed in a 23 cm high screen-wire cylinder with a 13 cm diameter and "stimulated to fly", while a radio receiver coupled to the electric field antenna recorded the signal from the antenna. The screen-wire cylinder acted both as an insect cage and as a Faraday cage. Thus, all measurements using the electric field antenna were made inside the Faraday cage. Koemel and Callahan (1994) further disclosed a determined frequency band for selected insects, for example that an unknown species of moths produced signals in the frequency band 15-45 Hz, Apis mellifera adansonii in the band 243-315 Hz, small mosquitoes (species unknown) in the band 300-400 Hz, and Syrphid flies in the band 230-245 Hz. Thus, different insects appear to produce different radio frequency signals within relatively large frequency bands and with an overlap in frequency bands between different insects.

US 2019/124914 A1 discloses an insect sensor system for detecting free-flying insects by the use of light sensors.

On this background an improved insect sensor system for detection of insects has been developed.

It is generally desirable to provide an improved system for detection, which provides high quality data for detection of insects.

It is further desirable to provide an improved system for classification and/or identification, which provides high quality data for classification and/or identification of insects.

It is further desirable to provide a system for detection, and/or classification, and/or identification, which has one or more of: low complexity, low power consumption, robustness, low cost.

Despite previous efforts it remains desirable to provide a system that solves one or more of the above problems and/or other problems, and/or that has other benefits, or that at least provides an alternative to existing solutions.

### Summary

The present disclosure relates to different aspects each yielding one or more of the benefits and advantages described in connection with one or more of the other aspects, and each having one or more embodiments corresponding to the embodiments described in connection with one or more of the other aspects and/or disclosed in the appended claims. In the aspects, the terms and features relate to the terms and features having the same name in the other aspects and therefore the descriptions and explanations of terms and features given in one aspect apply to the other aspects.

According to the invention, disclosed herein are embodiments of an insect sensor system for classification of insects, the insect sensor system comprising:
- one or more electric field sensors each configured to being sensitive to the electric field in a respective measurement area and each configured to acquire time-dependent measurements indicative of electric field strength,
- a data processing system configured to process the time-resolved measurements from the one or more electric field sensors to provide frequency-resolved data,
wherein the data processing system is further configured to classify one or more insects based at least in part on the frequency-resolved data.

The embodiments of the insect sensor system for classification of insects may be combined with embodiments of other aspects described herein.

The electric field strength may be measured as an absolute value or as a variation in electric field strength. An electric field (E-field) sensor is a sensor that is configured to gauge electric field strength directly or indirectly. The dimension of electric field strength is volts/meter (V/m). In some embodiments, the insect sensor system is configured to measure electric field strength from 10 V/m, such as from 1 V/m, such as from 0.5 V/m, such as from 0.1 V/m, such as from 0.05 V/m, such as from 0.01 V/m. Electric field sensors are generally configured for passive detection, which has the advantage that such sensors require little power.

An insect may produce an electric field and/or it may alter an existing electric field around it. Further, an insect may produce or cause a modulated electric field signal, at least when it beats its wings. An insects effect on the electric field may be phrased as the insects signature, which may be measured when measuring the electric field at a measurement area. Thus, an insect signature is a measurable attribute, which can be utilized in the detection of the insect, and possibly in the classification and/or identification of the detected insect.

Detection of an insect is about recognizing the presence or absence of the insect, classification involves categorizing the insect into a broader group or class, and identification means providing specific details to uniquely distinguish it from others within that group. Thus, detection is the most basic level of recognition and means being able to tell that there is an insect in a given area, but it may not involve specifying the species nor any other identifying characteristics. This is usually the level of recognition provided by a motion sensor or motion-activated insect trap. Classification goes a step beyond detection and involves categorizing the detected insect into one of several predefined groups or classes. This level of recognition provides more information than simple detection but doesn't usually identify the specific individual or species. Identification is the highest level of recognition and involves providing specific information to uniquely distinguish one individual or species of insect from another. This often requires more detailed information, such as unique characteristics.

The acquired measurements are acquired over time. The process to provide frequency-resolved data may comprise dividing the acquired measurements into time segments and a short-time Fourier Transform (STFT) may be performed on the acquired measurements. Each time segment created as part of the STFT may be analysed to create a power spectrum of the energy distribution across frequencies. Alternatively, or additionally, a power spectrogram, i.e. a two-dimensional representation of the variation of power over time and across different frequencies may be created. Instead of STFT, one or more other known methods of transforming the time-dependent measurements into frequency-resolved data to describe how the amplitude (or power) of different frequency components contributes to the overall signal may be used, such as e.g. wavelet transformation, Hilbert transform, Wigner-Ville Distribution, etc. In some embodiments, the data processing system is configured to determine a representation of a distribution of signal power into frequency components, such as a power spectrum or a power spectrogram, based on the frequency-resolved data, and wherein the classification is based at least in part on the determined representation.

The data processing system may be configured to determine one or more frequency-domain characteristics, such as one or more spectral peaks, based on the frequency-resolved data and the classification is based at least in part on the determined one or more frequency-domain characteristics. In some embodiments, determining one or more frequency-domain characteristics comprises determining one or more spectral peaks, and/or number of spectral peaks, and/or a measure of a temporal variation of a determined frequency-domain characteristic. Determining a measure of a temporal variation may involve peak tracking, that is the shift in frequency or amplitude of one or more spectral peaks over time.

In some embodiments, determining one or more spectral peaks further comprises determining a measure of a shape and/or size and/or strength of a determined spectral peak. In some embodiments, determining one or more spectral peaks, and/or determining a measure of a shape and/or size and/or strength of a determined spectral peak comprises determining one or more of: peak amplitude, peak frequency, peak width, peak shape, and/or peak area. For example, as a measure of the strength of a peak the equivalent width of the peak may be determined. Alternative, or additionally, other suitable measures may be used to determine the strength of a peak.

Spectral peaks may have harmonics, which are integer multiples of the fundamental frequency. Harmonics are additional spectral peaks at frequencies that are multiples of the fundamental frequency. Determining one or more harmonics may comprise determining which harmonics are present, e.g. 2nd, 3rd, even, odd, etc. In some embodiments, the data processing system is configured to determine one or more fundamental frequencies and/or one or more harmonics based on the frequency-resolved data, and the classification is based at least in part on the determined one or more fundamental frequencies and/or determined one or more harmonics. In addition to determining the fundamental frequency and/or one or more harmonics, an analysis of the frequency-resolved data may comprise determining an absolute value, for example the area under a spectral peak, which may be used as an estimate of the energy contained within that specific frequency component, and/or to determine a relative value of one or more peaks, for example by comparing the peak to other peaks. That is the analysis may comprise determining the energy of one or more harmonics relative to that of one or more other harmonics and/or relative to that of the fundamental frequency. Alternatively, or additionally, it may comprise determining the amplitude, i.e. height, or bandwidth, i.e. width, of one or more harmonics relative to that of one or more other harmonics and/or relative to that of the fundamental frequency. Thus, in some embodiments, the data processing system is configured to determine one or more of the following frequency-domain features: absolute or relative energy of a fundamental frequency and/or of one or more harmonics, absolute or relative amplitude of a fundamental frequency and/or of one or more harmonics, absolute or relative bandwidth of a fundamental frequency and/or of one or more harmonics, and the classification is based at least in part on the determined one or more frequency-domain features. In some embodiments, detecting and/or classifying and/or identifying an insect may be based at least in part on the bandwidth of a signal, i.e. the broadness of a spectrum, where the broadness may be determined by a pre-determined minimum amount of signal or energy being present. As an example, one may consider two instances of insect events, i.e. two instances of an insect being detectable in the acquired measurements. Both insect events may have the same fundamental frequency; However, in one recorded insect event, the harmonics are uniformly distributed across the spectrum, i.e. they have close to or substantially the same energy, while in the other insect event, although both show an equivalent number of harmonics, most of the harmonic energy is concentrated in e.g. the lower harmonics, with relatively little energy present in the higher harmonics. It may then be reasonable to categorise the former as a broad-spectrum event and the latter as a narrow-spectrum event. Thus, an insect signature may be determined at least in part by the distribution of harmonic energy throughout the spectrum.

In some embodiments, the insect sensor system is configured to acquire measurements indicative of an electric field strength on an electric field that is frequency modulated, where the modulation is in a frequency range between 0.01 kHz and 22 kHz, such as between 0.01 kHz and 5 kHz, such as between 0.01 kHz and 2 kHz, such as between 0.01 kHz and 1 kHz, such as between 0.01 kHz and 0.8 kHz. That is, the one or more electric field sensors may be configured to have a suitable response within the frequency range. Achieving a consistent frequency response across a specified spectrum, ranging from low frequencies, such as e.g. 1 Hz, to higher frequencies, such as e.g. 4 kHz, necessitates careful consideration of both the frequency range and the self-capacitance of an electric field (E-field) sensor. The choice of self-capacitance, a parameter critical to the sensor's impedance, is intimately tied to the active probe size. The self-capacitance, effectively determined by the active probe size, influences the sensor's ability to deliver a uniform response across the frequency range.

In some embodiments, the data processing system is configured, based at least in part on the frequency-resolved data, to detect a presence of one or more insects in a proximity of the insect sensor system and to classify the one or more detected insects. The measurements indicative of electric field strength may comprise features related to the beating of an insect's wings, such as to one or more wing beat frequencies of an insect. For example, a fundamental frequency and/or one or more harmonics of that fundamental frequency determined from the measurements may be directly linked to a wing beat frequency of an insect. For example, a frequency or harmonic determined from the E-field sensor data may be substantially the same as an insect's wing beat frequency. In some embodiments, the data processing system is configured to detect and/or classify and/or identify one or more insects based at least in part on a determination of a fundamental wing beat frequency and/or on one or more harmonics of the fundamental wing beat frequency. A wing beat frequency may be a free flight wing beat frequency, i.e. a frequency of wing beats of a free flying insect, or a perching wing beat frequency, i.e. a frequency of wing beats of an insect sitting on a surface. Thus, the insect sensor system allows for detection and/or classification and/or identification of insects, and does so supported by an analysis of acquired measurements indicative of the electric field strength at one or more measurement areas.

The insect sensor system may be configured to measure near-field electric fields. An electric field sensor senses a near-field electric field as a high impedance signal, and the insect sensor system may comprise an instrumentation amplifier, such as a high impedance amplifier, chosen according to the type of electric field sensor used and/or desired signal output. Thus, in some embodiments, the electric field sensor further comprises one or more high impedance amplifiers and/or one or more high impedance differential amplifiers and/or one or more instrumentation amplifiers, which are configured to detect and amplify high impedance signals.

The data processing system may be further configured to counting the number of detected insects.

In some embodiments, the measurement area of each of the one or more electric field sensors is larger than 0.5 cm², such as larger than 0.7 cm², such as larger than 0.8 cm2, such as larger than 0.9 cm², such as larger than 1 cm², such as larger than 2 cm², such as larger than 3 cm², such as larger than 6 cm², and/or the measurement area of each of the one or more electric field sensors is between 0.5 cm² and 500 cm², such as between 0.7 cm² and 470 cm², such as between 0.8 cm² and 450 cm², such as between 0.9 cm² and 430 cm², such as between 1 cm² and 400 cm², such as between 2 cm² to 300 cm², such as between 6 cm² to 250 cm².

In some embodiments, the insect sensor system comprises a plurality of electric field sensors, which are paired two-and-two, and paired electric field sensors each have a measurement area, which corresponds to the measurement area in the paired electric field sensor, and wherein corresponding measurement areas are of substantially equal size, and have substantially the same overall shape. The measurements areas may be configured to have specific orientation, such as a specific orientation with respect to other measurement areas and possibly with respect to the electric field, such as the earth's electric field. Proper orientation and possibly alignment of the measurement areas may ensure that the electric field sensors capture the relevant electric field components. In some embodiments, corresponding measurement areas are configured and arranged to sense an electric field from at least substantially parallel and opposite directions. In some embodiments, each measurement area defines a primary direction, and wherein the primary directions of corresponding measurement areas are directed oppositely. In some embodiments, the primary direction of a measurement area is defined as the normal direction of the plane of largest projection area.

In some embodiments, paired electric field sensors are spaced apart from each other at a predetermined distance, and the predetermined distance between paired electric field sensors is between 0.05 m and 3 m, such as between 0.1 m and 2 m, such as between 0.15 m and 1.5 m, such as between 0.2 m and 1 m, such as between 0.25 m and 0.5 m, and/or the predetermined distance between paired electric field sensors is equal to or larger than 0.05 m, such as equal to or larger than 0.1 m, such as equal to or larger than 0.15 m, such as equal to or larger than 0.2 m, such as equal to or larger than 0.25 m. In some embodiments, the predetermined distance between paired sensor modules is determined as the distance between the centroid of corresponding measurement areas.

The orientation and possibly alignment of measurement areas may be defined using normal vectors, i.e. a vector that is perpendicular (orthogonal) to the surface at the specific point. In some embodiments, the insect sensor system comprises a plurality of measurement areas, and each measurement area of the plurality of measurement areas is configured such that at least one normal vector to the respective measurement area is substantially perpendicular to at least one normal vector of each of the remaining measurement areas in the plurality of measurement areas.

In some embodiments, the insect sensor system comprises two or more electric field sensors modules, and the data processing system is further configured to determine a speed and/or a direction of movement of a detected insect based at least in part on the measurements from two or more electric field sensors.

In some embodiments, at least part of one measurement area is shaped as a flat plate, a curved plate, a spherical dome, a semi-sphere, or a sphere.

The insect sensor system may be configured to utilise machine learning and base the classification on a classification model that has been trained to classify new, unseen data into the correct categories based on what it has learned from training data. Thus, in some embodiments, the data processing system is configured to perform the classification of the one or more insects at least by feeding the frequency-resolved data and/or one or more signal embeddings derived from the frequency-resolved data into a classification model, the classification model being configured to classify the frequency-resolved data and/or the one or more signal embeddings into an indication of an insect class associated with the frequency-resolved data and/or the one or more signal embeddings. Signal embeddings are low-dimensional representations of a signal that capture important and useful information, features, or characteristics of the signal. They can be derived through feature engineering using expert-domain knowledge, via data-driven methods using deep neural networks, or a combination of both methods. In some embodiments, the classification model comprises a trained machine-learning model, in particular a trained neural network model, trained to derive an indication of an insect class associated from received frequency-resolved data and/or received one or more signal embeddings. In some embodiments, the data processing system is configured to extract one or more signal embeddings from the frequency-resolved data and to feed the extracted signal embeddings into the classification model.

The insect sensor system may comprise one or more data processors as part of its data processing system. The one or more data processors are configured to receive the measurements indicative of electric field strength and to process the measurements to extract information therefrom. The one or more data processors may be further configured to determine a measure of insect activity based at least on the detected and/or classified and/or identified one or more insects. Some or all of the processing steps may be performed by a local data processing system, or some or all of the processing steps may be performed by an external data processing system, or the processing steps may be distributed between a local processing system and an external processing system.

Here and in the following, the term data processor is intended to comprise any circuit and/or device suitably adapted to perform the functions described herein. In particular, the term data processor comprises a general- or special-purpose programmable microprocessor unit, such as a central processing unit (CPU) of a computer or of another data processing system, a digital signal processing unit (DSP), an application specific integrated circuits (ASIC), a programmable logic arrays (PLA), a field programmable gate array (FPGA), a special purpose electronic circuit, etc., or a combination thereof.

In some preferable embodiments, the insect sensor system is configured to measure electric field variations arising from freely moving insects, i.e. from insects moving outside of any cage or enclosure. Thus, the insect sensor system may advantageously be configured to provide a probe volume that is an enclosure-free void/space allowing unrestricted movement of living insects, such as living airborne insects, into and out of the enclosure-free void/space. A volume around the measurement area of an electric field sensor, in which the electric field sensor may be sensitive to the electric field and/or variations in the electric field, e.g. due to an insect, may be referred to as the probe volume of the electric field sensor. Thus, the insect sensor system may be said to have a probe volume. The insect sensor system is particularly useful for recording data indicative of insect activity in a geographic area. In particular, the insect sensor system is non-intrusive to the environment in the sense that it does not rely on and, consequently, is not biased by pheromones, light, colour, or other means of attracting, trapping or killing insects. In particular, insects may be detected in their natural environment regardless of their affinity to a certain lure or trap technology, thus reducing the biases of the measurement results to different trapping techniques for different insect species.

In some embodiments, the insect sensor system comprises an electric field generator configured to generate an electric field in a volume close to or at least partially surrounding at least one of the one or more electric field sensors. The insect sensor system may comprise an electric field generator configured to generate an electric field at a measurement area of at least one of the one or more electric field sensors. Thus, the electric field generator may be configured to generate and shape an electric field, for example where there is no significant electric field present, e.g. indoors, or in addition to an existing electric field. The electric field volume generated by the electric field generator may be e.g. cuboid, spherical, or cylindrical. An insect sensor system comprising an electric field generator may be configured to provide an enclosure-free void/space allowing unrestricted movement of living insects, such as living airborne insects, into and out of the void/space.

The electric field may be configured to generate an electric field with substantially linear field lines. For example, the electric field generator may be configured to generate an electric field with substantially vertical field lines, where vertical may be in relation to a surface on the insect sensor system or in relation to the gravitational meaning, i.e. the generated field lines substantially align with the direction of local gravity. In some embodiments, the electric field generator may be configured to generate an electric field with substantially horizontal field lines. In some embodiments, the electric field generator may be configured to generate an electric field with field lines which are at an angle to the horizontal or vertical direction.

The electric field generator may be configured to generate an electric field with a field strength in the range 20V/m to 300 V/m, such as in the range 25 V/m to 250 V/m, such as in the range 30 V/m to 200 V/m, such as in the range 30 V/m to 150 V/m. The insect sensor system may comprise more than one electric field generator.

The electric field generator may be configured to generate a static electric field or a time-varying electric field. The electric field generator may be configured to generate a time-varying electric field with a selected frequency or frequency band in the range 10 kHz to 1 MHz, such as in the range 50 kHz to 500 kHz, such as in the range 80 kHz to 200 kHz. In some embodiments, the insect sensor system comprises two or more electric field generators, where each may be configured to generate a time-varying electric field with a selected frequency or frequency band that is different from that of the other electric field generator(s).

The insect sensor system may be configured to selectively detect variations, i.e. modulation, of electric fields in one or more frequency bands, such as in a frequency band comprising a selected frequency or frequency band. The insect sensor system may thus be configured to detect modulation signals from an electric field volume generated by an electric field generator producing a time-varying electric field. Thus, in some embodiments, the insect sensor system is configured to detect modulation of the electric field a selected frequency or frequency band in the range 10 kHz to 1 MHz, such as in the range 50 kHz to 500 kHz, such as in the range 80 kHz to 200 kHz. Further, the detector module may selectively detect predetermined frequency bands and efficiently suppress background noise. It will be appreciated that some embodiments can include more than two frequencies/frequency bands and the more than two frequencies/frequency bands may each be different from each other. In some embodiments, the insect sensor system is configured to selectively detect modulated electric fields at two or more frequencies or small frequency bands where the two or more frequencies or frequency bands are spaced apart from each other and do not overlap each other.

The insect sensor system may advantageously be configured for at least part of it being mounted on, or constructed into, an unmanned aerial vehicle (UAV). For example, the one or more electric field sensors may be configured for being mounted on, or constructed into, an unmanned aerial vehicle (UAV).

The insect sensor system or at least part of an insect sensor system may be configured for being stationary or movable, such as part of a movable unit. One or more electric field sensors may be comprised within a sensor unit and, optionally, some or all of the data processing system may be comprised within the sensor unit as well. A sensor unit may comprise a propulsion mechanism, e.g. a motor and wheels, belts, a propeller, or other type propulsion system to form a movable sensor unit. The movable sensor unit may thus be self-propelled. The movable sensor unit may be part of, such as integrated into or mounted on, a manually driven, semi-autonomous or autonomous vehicle. For example, the sensor unit may be part of, such as integrated into or mounted on, a tractor, a movable farming machine, a spraying boom, or other agricultural vehicle, on an unmanned aerial vehicle, a self-driving robot, or the like. The movable sensor unit may be part of, such as integrated into or mounted on, a ground vehicle or an aerial vehicle. The movable sensor unit may be mounted on, or be mountable on, an autonomous vehicle or an operator-controlled vehicle, such as a remote-controlled vehicle or a manned vehicle. A movable sensor unit allows larger areas to be mapped than would be feasible or reasonable with a larger number of stationary sensors. Components in a sensor unit or in a vehicle to which a sensor unit is mounted on may need to be shielded in order to minimize electrical noise that could affect the measurements indicative of electric field strength.

A movable sensor unit may traverse a geographic area, while continually or intermittently acquiring measurements indicative of electric field strength. A movable sensor unit may repeatedly re-visit some portions of the area or otherwise traverse the target area in a nonuniform manner. The amount of time spent acquiring measurements at a location may be a parameter in the calculation of a measure of insect activity. In some embodiments, the movable detection system may repeatedly traverse some or even all portions of the geographic area, e.g. so as to increase the accuracy of the measurements. This process may be performed according to a predefined schedule and/or it may be performed adaptively, responsive to the already acquired data. The movable sensor unit may be configured to have a stop-measure-go mode in which the movable sensor unit stops to allow one or more sensors of the sensor unit to acquire measurements at a standstill before the sensor unit moves on. A movable sensor unit may be configured to vary its speed, such as slow down, speed up, or stop, to allow the one or more sensors of the sensor unit to acquire measurements at an appropriate speed. The appropriate speed may be dependent on factors determining what data indicative of insect activity the one or more sensors should be able to capture. For example, the appropriate speed may be dependent on which insects are anticipated to be present in the area, and/or crop(s), and/or weather, and/or time of day. The sensor, or sensor unit, or its movable support may comprise a position sensor, e.g. a GPS sensor, for tracking the position of the detection system while traversing an area. Accordingly, the insect sensor system may be able to record the position of the one or more electric field sensors at respective times, e.g. at regular time intervals, e.g. so as obtain a sequence of time-stamped position coordinates.

The data processing system may be further configured to determine a measure of insect activity based at least on the detected and/or classified and/or identified one or more insects. The measure of insect activity is indicative of insect activity in at least a portion of an area in which the insect sensor system made measurements. Thus, the measure of insect activity may be indicative of insect activity in at least a portion of an area traversed by a movable sensor unit. The data processing system may be implemented as a local data processing system, integrated into a sensor unit together with the one or more electric field sensors, and configured to process the signals received from the one or more electric field sensors. In some embodiments, some or all of the processing steps are performed by a processing system external to a sensor unit comprising the sensor, i.e. the data processing system may be implemented in a device external to the sensor unit or it may be distributed between a local data processing system of the sensor unit and a remote data processing system, separate from the sensor unit.

The insect sensor system may further comprise an image sensor configured to obtain one or more digital images of at least a part of the probe volume of the one or more electric field sensors or of the insect sensor system. The image sensor may be configured to obtain the one or more digital images in response to the detection and/or classification and/or identification of one or more insects. Thus, the image sensor may be arranged such that the field of view of the image sensor overlaps at least partially with the probe volume of one or more of the one or more electric field sensors. The image sensor may be comprised in a digital camera, such as a commercial digital camera. In some embodiments, the image sensor is configured to record in one or more ranges of electromagnetic radiation, such as within the visible spectrum, IR wavelengths, and/or UV wavelengths. The image sensor may be a high-resolution image sensor. In some embodiments, the image sensor comprises an emitter, which acts as a flash, to illuminate the insect. In some embodiments, an emitter comprised in an illumination module of an optical sensor may be used as a flash to illuminate an insect. An emitter used as flash may be monochrome or IR in which case the images obtained will not be in colour. When it is required that the one or more images be in colour, daylight or a flash producing suitable light in the visible spectrum is required. The insect sensor system may be further configured such that the image sensor is triggered in response to the detection and/or classification and/or identification of one or more insects. The image sensor may be configured to be in a standby mode in which the image sensor is not recording, transmitting, and/or storing images until the image sensor is activated by a trigger signal. The trigger signal may be sent by a data processing system, such as a local data processing system or an external data processing system. This allows for the insect sensor system to be in a state, wherein the image sensor is not taking images continuously or wherein images taken by the image sensor are not kept as data. An image sensor, in particular a high-resolution image sensor, can create a large amount of data in a short time. By only obtaining the one or more images from the image sensor in response to a trigger signal, the amount of data can be greatly reduced. After obtaining the one or more images of the one or more detected/classified/identified insects, the image sensor may re-enter the standby mode.

The one or more digital images may be one or more single images or a time sequence of images/video frames. The time sequence of images may be configured in a video format. The time sequence may be a high-speed video clip. In some embodiments, the insect sensor system is configured to obtain the one or more digital images less than 250 milliseconds after, such as less than 100 milliseconds after a trigger signal, such as less than 50 milliseconds after a trigger signal, such as less than 10 milliseconds after a trigger signal, such as less than 5 milliseconds after a trigger signal, such as less than 2 milliseconds after a trigger signal. The faster the one or more image are captured after a detection and/or classification and/or identification of one or more insects, the better the system allows for images to be obtained of faster insects, which might move out of the field of view of the camera if the delay between the detection/classification/identification and the capturing of the one or more images is relatively large.

The insect sensor system may be configured to time stamp measurements indicative of an electric field strength and/or detection/classification/identification of one or more insects, and/or to time stamp image data obtained by the image sensor. This allows for sensor data indicative of at least one insect to be paired with one or more images taken. Alternatively or additionally, the insect sensor system may associate measurements indicative of electric field strength or insect detection/classification/identification with one or more items of image data obtained by the image sensor in another manner, in particular one or more items of image data recorded by the image sensor responsive to one or more insect detections/classifications/identifications.

One or more measurements indicative of electric field strength based on which one or more insects were detected/classified/identified and one or more images associated with an insect detection/classification/identification may be paired and used to train a machine-learning model to detect, classify, and/or identify an insect using only the one or more measurements indicative of electric field strength. The detection and/or classification and/or identification of the insect from the image may be done by an Al picture recognition system. Alternatively, or additionally, the type, e.g. species, of insect may be determined from the one or more images by a user. A known way to obtain insect sensor data is to use a sensor in an insectarium, also referred to as insectary, with predetermined species of insects. However, insects do not behave naturally in an insectary and in particular do not move naturally. The insect sensor system comprising an image sensor as described above may allow for the datasets of sensor data and image data to be obtained in the natural habitat of the insects, such as e.g. in an agricultural field for growing crops, an area of forest or another geographic area, where the insects behave more normally. Thus, the datasets obtained using the insect detection system are superior for training of a machine-learning model to produce an algorithm that can be used to classify and/or identify insects in their natural habitat. The training datasets may also be used the other way around to train a machine-learning model to recognise the type, e.g. species, of insect from the one or more images based on a classification determined from the one or more sensor data.

Examples of suitable machine-learning models include a convolutional neural network. For example, in some embodiments, the sensor signal or a pre-processed sensor signal, and/or one or more images of the detected insect, may be fed into a neural network, such as a convolutional neural network, or another type of machine-learning model. The neural network may be a feed-forward neural network that includes an input layer receiving electric field sensor signal, e.g. a time series of electric field sensor data, and/or the one or more digital images. The neural network may optionally receive additional inputs. The neural network may include one or more hidden layers and an output layer. The neural network may be trained, based on a dataset of training examples, to classify the electric field sensor signal and/or the one or more images of a detected insect into respective types, e.g. species, of insects. To this end, the training examples may include electric field sensor data as well as one or more images that have been obtained responsive to one or more of said detections/classifications/identifications. The hidden layers of the trained neural network may represent automatically extracted features of the electric field sensor data and images that are fed into the neural network. The output layer may represent a classification received electric field sensor signal and/or images based on feature values of the automatically extracted features as extracted by the one or more hidden layers. In some embodiments, instead of feeding raw data to a classification algorithm, the raw data is transformed prior to being fed to the classification algorithm, for example by feature engineering. Examples may be humanly engineered features and/or features from dimensionality reduction methods, such as Principal Component Analysis or Independent Component Analysis, performed on the sensor signal and/or one of more images, and the transformed data is then fed into a classification algorithms such as Logistic regression, Support Vector Machines, Decision Trees, Naïve Bayes, Thresholding.

Further disclosed herein is a method for classification of insects, the method comprising the steps:
- acquiring time-dependent electric field strength measurements from one or more electric field sensors, each electric field sensor being configured to being sensitive to the electric field in a respective measurement area,
- processing the time-dependent electric field strength measurements from the one or more electric field sensors to provide frequency-resolved data, and
- classifying one or more insects based at least in part on the frequency-resolved data.

The method may be performed using an insect sensor system described herein. In some embodiments, the electric field sensors are part of an insect sensor system as described herein. In some embodiments, the method further comprises detecting, based at least in part on the frequency-resolved data, a presence of one or more insects, and the step of classifying further comprises classifying the one or more detected insects based at least in part on the frequency-resolved data. In some embodiments, the step of classifying further comprising feeding the frequency-resolved data and/or one or more signal embeddings derived from the frequency-resolved data into a classification model, the classification model being configured to classify the frequency-resolved data and/or the one or more signal embeddings into an indication of an insect class associated with the frequency-resolved data and/or the one or more signal embeddings. Signal embeddings are low-dimensional representations of a signal that capture important and useful information, features, or characteristics of the signal. They can be derived through feature engineering using expert-domain knowledge, via data-driven methods using deep neural networks, or a combination of both methods. In some embodiments, the classification model comprises a trained machine-learning model, in particular a trained neural network model, trained to derive an indication of an insect class associated from received frequency-resolved data and/or received one or more signal embeddings. In some embodiments, the step of classifying further comprises extracting one or more signal embeddings from the frequency-resolved data and to feed the extracted signal embeddings into the classification model.

In some embodiments, the method further comprises determining a representation of a distribution of signal power into frequency components, such as a power spectrum or a power spectrogram, based on the frequency-resolved data, and the classification is based at least in part on the determined representation.

In some embodiments, the method further comprises determining one or more frequency-domain characteristics, such as one or more spectral peaks, based on the frequency-resolved data, and the classification is based at least in part on the determined one or more frequency-domain characteristics.

In some embodiments, determining one or more frequency-domain characteristics comprises determining one or more spectral peaks, and/or number of spectral peaks, and/or a measure of a temporal variation of a determined frequency-domain characteristic. In some embodiments, determining one or more spectral peaks further comprises determining a measure of a shape and/or size and/or strength of a determined spectral peak. In some embodiments, determining one or more spectral peaks, and/or determining a measure of a shape and/or size and/or strength of a determined spectral peak comprises determining one or more of: peak amplitude, peak frequency, peak width, peak shape, and/or peak area. For example, as a measure of the strength of a peak the equivalent width of the peak may be determined. Alternative, or additionally, other suitable measures may be used to determine the strength of a peak.

In some embodiments, the method further comprises determining one or more fundamental frequencies and/or one or more harmonics of a temporal modulation of the measured electric field strength based on the frequency-resolved data, and the classification is based at least in part on the determined one or more fundamental frequencies and/or determined one or more harmonics.

In some embodiments, the method further comprising:
- determining one or more of the following frequency-domain features:
- absolute or relative energy of a fundamental frequency and/or of one or more harmonics,
- absolute or relative amplitude of a fundamental frequency and/or of one or more harmonics,
- absolute or relative bandwidth of a fundamental frequency and/or of one or more harmonics, and
the classification is based at least in part on the determined one or more frequency-domain features.

According to the invention, disclosed herein is a computer-implemented method for classification of insects, the method comprising the steps:
- receiving acquired time-dependent electric field strength measurements from one or more electric field sensors,
- processing the time-dependent electric field strength measurements from the one or more electric field sensors to provide frequency-resolved data, and
- classifying one or more insects based at least in part on the frequency-resolved data.

Further disclosed herein are embodiments of an insect sensor system for detection of insects, the insect sensor system comprising:
- an even number of sensor modules, the sensor modules being paired two-and-two, each sensor module being configured to acquire measurements indicative of an electric field strength at one or more measurement areas, each measurement area being sensitive to the electric field at the measurement area, each sensor module being further configured to provide a single output based on the acquired measurements, and
- a data processing system configured to process the acquired measurements to create a noise-reduced dataset for each sensor module pair based on the single output from each sensor module in the respective pair of sensor modules so as to reduce or remove common mode noise from the measurements,
wherein the data processing system is further configured to detect one or more insects based at least in part on one or more noise-reduced datasets.

The embodiments of the insect sensor system for detection of insects may be combined with embodiments of other aspects described herein.

The insect sensor system detects the presence of insects in its proximity and may be configured to classify the detected insects. Thus, in some embodiments, the data processing system is configured, based at least in part on the one or more noise-reduced datasets, to detect a presence of one or more insects in a proximity of the insect sensor system and, optionally, to classify the one or more detected insects.

The noise reduction may be accomplished e.g. by differential measurements, whereby two dataset, typically taken substantially simultaneously or under very similar conditions, are subtracted one from the other. The idea being that noise or interference that affects both measurements will be reduced or cancelled out by taking the difference. In some embodiments, the noise-reduced dataset is indicative of the difference in the measurements acquired by the two sensor modules in a respective pair of sensor modules.

A volume around a measurement area of an electric field sensor, in which the electric field sensor may be sensitive to the electric field and/or variations in the electric field, e.g. due to an insect, may be referred to as the probe volume of the electric field sensor. The probe volume of an electric field sensor may depend, at least in part, on the size and shape of the measurement area(s) of the electric field sensor. A larger a probe volume, e.g. due to large measurement areas, may be more susceptible to environmental noise than a smaller probe volume, while the signal originating from any insect is not increased by having a larger probe volume. Thus, the size and shape of the measurement area(s) may be optimized to provide an appropriate signal for the detection of insects, such as an appropriate signal to noise ratio.

In some embodiments, the combined measurement area of each of the sensor modules is larger than 0.5 cm², such as larger than 0.7 cm², such as larger than 0.8 cm², such as larger than 0.9 cm², such as larger than 1 cm², such as larger than 2cm², such as larger than 3 cm², such as larger than 6 cm². In some embodiments, the combined measurement area of each of the sensor modules is between 0.5 cm² and 500 cm², such as between 0.7 cm² and 470 cm², such as between 0.8 cm² and 450 cm², such as between 0.9 cm² and 430 cm², such as between 1 cm² and 400 cm², such as between 2 cm² to 300 cm², such as between 6 cm² to 250 cm². In embodiments of an insect sensor system with a single electric field sensor or with a single electric field sensor in a sensor module, the size of the combined measurement area given above is the size of the measurement area of the single electric field sensor or of the single electric field sensor in the sensor module, respectively. The size of the measurement area of an electric field sensor may be a pivotal factor, dictating the balance between spatial resolution and sensitivity of the e-field sensor. A smaller measurement area enhances spatial resolution, allowing for precise detection and localization of variations in electric field intensity. Conversely, larger measurement areas increase sensitivity by capturing a greater portion of the electric field. However, this expansion in size may inadvertently elevate susceptibility to unwanted signals and noise. Achieving an optimal balance between spatial resolution and sensitivity is crucial when selecting the size of a measurement area. Tailoring it to specific application requirements ensures an ideal trade-off, maintaining a consistent frequency response across the desired spectrum. This meticulous calibration guarantees the e-field sensor's optimal functionality and accuracy for a diverse array of applications.

Each sensor module in a sensor module pair may comprise one or more measurement areas, which each correspond to a measurement area in the sensor module it is paired with. In some embodiments, a measurement area in a sensor module has a corresponding measurement area in the paired sensor module, and wherein corresponding measurement areas are of substantially equal size, and have substantially the same overall shape. That is, and paired sensor modules each comprise a measurement area, which corresponds to a measurement area in the paired sensor module. In some embodiments, only measurements from corresponding measurement areas are used in the creation of a noise-reduced dataset. The measurements areas may be configured to have specific orientation, such as a specific orientation with respect to other measurement areas and possibly with respect to the electric field, such as the earth's electric field. Proper orientation and possibly alignment of the measurement areas may ensure that the electric field sensors capture the relevant electric field components. In some embodiments, corresponding measurement areas are configured and arranged to sense an electric field from at least substantially parallel and opposite directions. In some embodiments, each measurement area defines a primary direction, and the primary directions of corresponding measurement areas are directed oppositely. In some embodiments, the primary direction of a measurement area is defined as the normal direction of the plane of largest projection area. Alternatively, the embodiments of corresponding measurement areas may be part of an insect sensor system as described in other aspects herein.

In some embodiments, paired sensor modules are spaced apart from each other at a predetermined distance, and the predetermined distance between paired sensor modules is between 0.05 m and 3 m, such as between 0.1 m and 2 m, such as between 0.15 m and 1.5 m, such as between 0.2 and 1 m, such as between 0.25 and 0.5 m, and/or the predetermined distance between paired sensor modules is equal to or larger than 0.05 m, such as equal to or larger than 0.1 m, such as equal to or larger than 0.15 m, such as equal to or larger than 0.2 m, such as equal to or larger than 0.25 m. The predetermined distance between paired sensor modules may be determined from the part of a measurement area of one sensor module to the closest measurement area in the other sensor module of the pair. Alternatively, the predetermined distance between paired sensor module may be determined as the distance between the centroid of corresponding measurement areas. Using the centroid as a way to define the predetermined distance between paired sensor module may be particularly suitable in embodiments comprising a plurality of measurement areas in each sensor module. In some embodiments, the predetermined distance between paired sensor modules is determined as the distance between the centroid of corresponding measurement areas.

The orientation and possibly alignment of measurement areas may be defined using normal vectors, i.e. a vector that is perpendicular (orthogonal) to the surface at the specific point. In some embodiments, the two sensor modules in any of the one or more sensor module pairs each comprise a plurality of measurement areas, and each measurement area of the plurality of measurement areas is configured such that at least one normal vector to the respective measurement area is substantially perpendicular to at least one normal vector of each of the remaining measurement areas in the plurality of measurement areas. In some embodiments, the insect sensor system comprises two or more pairs of sensor modules, and at least one measurement area of a sensor module is configured such that at least one normal vector to the respective measurement area is substantially perpendicular to at least one normal vector of a measurement area of a sensor module belonging to a different pair of sensor modules and/or substantially perpendicular to at least one normal vector of each measurement area of a sensor module belonging to a different pair of sensor modules.

A measurement area may have any suitable shape. Some shapes may be more suitable depending on the purpose of the insect sensor system and other configuration parameters. In some embodiments, at least part of one measurement area in a sensor module is shaped as a flat plate, a curved plate, a spherical dome, a semi-sphere, or a sphere.

In some embodiments, the insect sensor system comprises two or more pairs of sensor modules, and wherein the data processing system is further configured to determine a speed and/or a direction of movement of a detected insect based at least in part on two or more noise-reduced datasets.

In some embodiments, the insect sensor system is configured to measure electric field variations arising from freely moving insects, i.e. from insects moving outside of any cage or enclosure.

Further disclosed herein is a method for detection of insects, the method comprising the steps:
- acquiring data representative of an electric field strength, the data being acquired by an even number of sensor modules paired two-and-two, each sensor module providing a single output based on the acquired measurements,
- processing the acquired measurements to create a noise-reduced dataset for each sensor module pair based on the single output from each sensor module in the respective pair of sensor modules so as to reduce or remove common mode noise from the data,
wherein the method further comprises:
- detecting one or more insects based at least in part on one or more noise-reduced datasets.

The method may be performed using an insect sensor system described herein. In some embodiments, the electric field sensors are part of an insect sensor system as described herein. In some embodiments, the step of creating a noise-reduced dataset further comprises creating a dataset indicative of the difference in the data acquired by the two sensor modules in a respective pair of sensor modules.

In some embodiments, the step of detecting one or more insects further comprises detecting a presence of one or more insects in a proximity of the insect sensor system, and, optionally, the method further comprises classifying the one or more detected insects.

In some embodiments, the method further comprises determining a speed and/or a direction of movement of a detected insect based at least in part on two or more noise-reduced datasets.

In some embodiments, a method or a computer-implemented method disclosed herein further comprises creation of one or more training datasets for a machine-learning model by pairing acquired E-field sensor data with one or more images of each of one or more detected insects. In some embodiments, a method or a computer-implemented method further comprises receiving, by a data processing system, the one or more training datasets, the data processing system comprising a machine-learning model, and the method or the computer-implemented method further comprises training of the machine-learning model using the training dataset to classify the insect into respective types, e.g. species, for example training of the machine-learning model to classify the insect based on the acquired measurements of electric field strength and/or on frequency-resolved data and/or on one or more noise-reduced datasets.

In some embodiments of a method or a computer-implemented method, the process is capable of detecting individual insects, and/or classify and/or identify one or more insects. Accordingly, a measure of insect activity may be a total insect activity indicative of the amount of all detectable and/or classified and/or identified insects. A measure of insect activity may be indicative of a number of insects in the same part of a geographic area. Alternatively, a measure of insect activity may be a specific insect activity indicative of the number of insects of one or more specific types, e.g. one or more specific species, life stages, and/or the like. Yet alternatively, any measure of insect activity may be indicative of a local biodiversity index, i.e. a numerical estimate of the diversity of insect at a specific level such as species, family, or order. Here, different types of insects may refer to different species, functional groups, or to other insect categories of a suitable taxonomy. Alternatively or additionally, different types of insects may refer to different life stages of insects and/or to other classifications. A measure of insect activity based on the amount of all detectable and/or classified and/or identified insects may be aggregated over a period of time, for example on an hourly and/or daily and/or weekly basis. That is, the measure of insect activity may indicate the number of detected and/or classified and/or identified insects on e.g. an hourly, daily and/or weekly, etc., basis.

The identification may at least in part be based on a look-up table, a decision tree, a neural network, a support vector machine, and/or the like. Alternatively or additionally, the identification may directly be based on the acquired measurements indicative of electric field strength. The identification of respective types of insects may be based on an indicator feature extracted from the acquired measurements by a trained machine-learning algorithm. Such identification may e.g. be performed by a trained machine-learning model, e.g. a model configured to receive a representation of the acquired measurements and to classify the received measurements, such as classify the received measurements into one of a known type of insects. In some embodiments, a method or a computer-implemented method further comprises calculating a measure of insect activity based at least on the detected and/or classified and/or identified one or more insects. The measure of insect activity is indicative of insect activity in the area around one or more electric field sensors and/or is indicative of insect activity in the area traversed by a movable sensor unit comprising one or more electric field sensors.

Further, a measure of insect activity may be indicative of an evenness of a spread based on the frequency-resolved data, for example of an evenness in the spread of fundamental frequencies of detected and/or classified and/or identified insects. A smaller spread in fundamental frequency is an indication that fewer different insects are present near the location of, or area traversed by, the one or more electric field sensors of the insect sensor system, while a larger spread is an indication of a more diverse population of insects. Thus, such a measure of insect activity may be indicative of biodiversity. The measure of insect activity indicative of an evenness of a spread based on the frequency-resolved data may be aggregated over a period of time, for example on an hourly/daily/weekly/etc. basis.

Further, a measure of insect activity may be indicative of the total weight of classified and/or identified insects in the same part of a geographic area. A small biomass of insects indicates that food for animals that depend on insects as a food source is scarce, while a large biomass of insects indicates that food is plenty. Thus, such a measure of insect activity may be indicative of the quality of an ecosystem. The measure of insect activity indicative of the total weight of classified and/or identified insects may be aggregated over a period of time, for example on an hourly/daily/weekly/etc. basis.

In some embodiments, a method or a computer-implemented method further comprises determining one or more local insect control measures. Insect control measures may be e.g. the release of beneficial insects and/or biological agents for reducing or suppressing undesired insect activity. In some embodiments, the method or the computer-implemented method further comprises controlling an insect activity control device to perform one or more of the determined local insect control measures in the area.

According to an aspect, disclosed herein are embodiments of a data processing system configured to perform steps of a computer-implemented method described herein. In particular, the data processing system may have stored thereon program code adapted to cause, when executed by the data processing system, the data processing system to perform the computer-implemented steps of a method described herein. The data processing system may be embodied as a single computer or as a distributed system including multiple computers, e.g. a client-server system, a cloud based system, etc. The data processing system may include a data storage device for storing the computer program and data such as any or all of sensor data, locality information, target information, and historical data. The data processing system may directly or indirectly be communicatively coupled to an insect sensor system as described herein, such as to a movable insect sensor system, and receive the acquired measurements indicative of electric field strength, or processed data, from the insect sensor system. To this end, the data processing system may comprise a suitable wired or wireless communications interface.

According to an aspect, a computer program comprises program code adapted to cause, when executed by a data processing system, the data processing system to perform computer-implemented steps of a method described herein. The computer program may be embodied as a computer-readable medium, such as a CD-ROM, DVD, optical disc, memory card, flash memory, magnetic storage device, floppy disk, hard disk, etc. having stored thereupon the computer program. According to one aspect, a computer-readable medium has stored thereupon a computer program as described herein.

In the aspects disclosed herein, terms and features relate to the terms and features having the same name in the other aspects and therefore the descriptions and explanations of terms and features given in one aspect apply, with appropriate changes, to the other aspects. Additional aspects, embodiments, features and advantages will be made apparent from the following detailed description of embodiments and with reference to the accompanying drawings.

### Brief description of the drawings

Preferred embodiments will be described in more detail in connection with the appended drawings, where:
FIGS. 1 and 2 show schematic views of an insect sensor system according to some embodiments,
FIG. 3 shows a schematic view of a data processing system according to some embodiments,
FIG. 4A and 4B shows a schematic view of at least part of an insect sensor system according to some embodiments,
Fig. 5 shows a schematic view of an arrangement of electric field sensors for use in an insect sensor system according to some embodiments,
Figs. 6A-6F schematically illustrate more detailed views of electronic components of a sensor unit according to some embodiments,
Fig. 7 shows a schematic view of an insect sensor system comprising a plurality of sensor units and a central receiver according to some embodiments,
Fig. 8 shows a process flow from acquiring of time-dependent measurements indicative of electric field strength to a spectral analysis on the acquired measurements according to some embodiments,
Figs. 9A and 9B show schematic views of an insect sensor system according to some embodiments,
Fig. 10 shows a schematic flow diagram of a method for detection and/or classification and/or identification of insects according to some embodiments,
Fig. 11 shows a schematic flow diagram of a computer-implemented method for detection and/or classification and/or identification of insects according to some embodiments, and
Figs. 12-16 shows examples of power spectrograms based on acquired measurements indicative of electric field strength.

### Detailed description

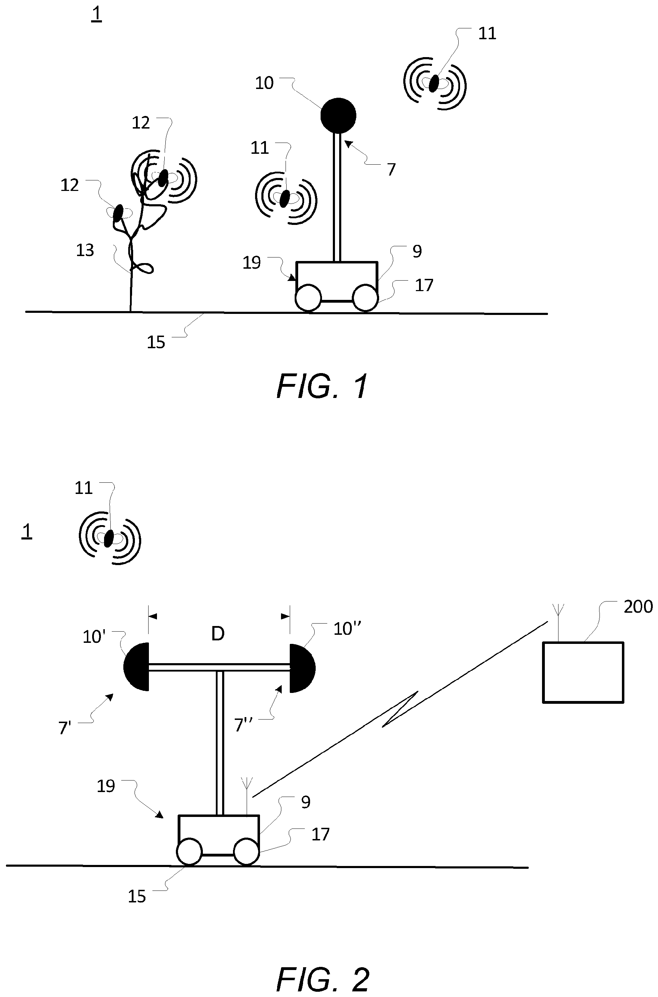

FIG. 1 shows a schematic view of an insect sensor system, generally designated by reference numeral 1, according to some embodiments. The insect sensor system comprises a mobile sensor unit 19 configured for capture and digitalisation of signals resulting from measurements indicative of electric field strength for use in the detection and/or classification and/or identification of insects. The sensor unit 19 comprises a housing 9 within which may be encased at least part of the electronic components needed for the functioning of the sensor unit 19.

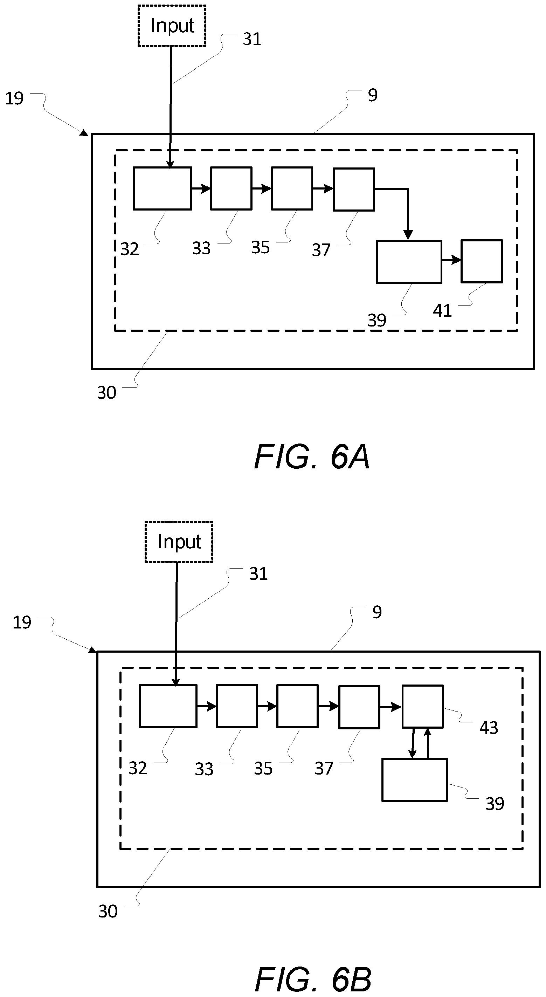

The sensor unit 19 has an electric field sensor 7, which is sensitive to the electric field in a measurement area 10, which, in the embodiment shown in fig. 1, is shaped as a sphere. In other embodiments, at least part of the measurement area of an electric field sensor of the insect sensor system may be an antenna rod, and thus at least partially cylindrical, or at least part of the measurement area of an electric field sensor may be shaped as a flat plate, a curved plate, a spherical dome, a semi-sphere, or a sphere. In some embodiments, the electric field sensor 7 may be a commercial electric field probe. At least part of the electric field sensor 7 is mounted on the housing 9 and coupled to electronic components within the housing, for example to the components described in more detail in figs. 6A-6F.

The electric field sensor 7 is configured to acquire measurements indicative of electric field strength, such as time-dependent measurements indicative of the strength of the electric field at various times.

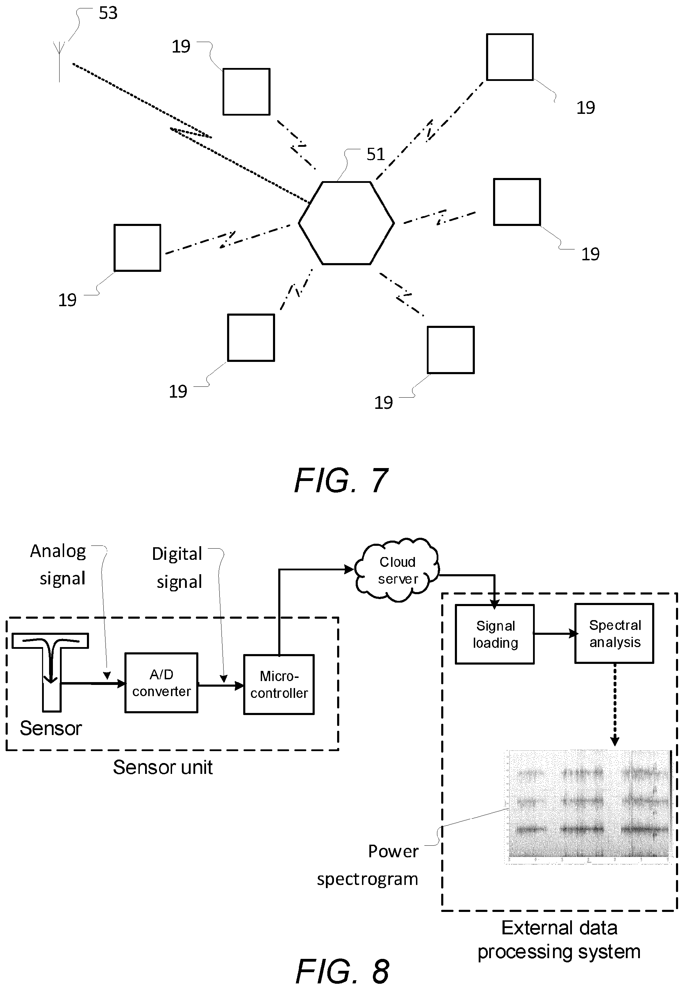

A volume around the measurement area of an electric field sensor, in which the electric field sensor may be sensitive to the electric field and/or variations in the electric field, e.g. due to an insect, may be referred to as the probe volume of the electric field sensor. Thus, the insect sensor system may be said to have a probe volume. The sensor unit 19 is thus configured to acquire electric field sensor data within a probe volume surrounding the electric field sensor 7. To cover a larger volume than possible with a single sensor unit 19, a plurality of sensor units may be utilised, e.g. as described in connection with fig. 7. Alternatively, or additionally, a sensor unit may 19 comprise a plurality of electric field sensors, which may extend the probe volume of the sensor unit, e.g. as described in connection with fig. 2. The insect sensor system is configured to allow insects to move about freely around and near the electric field sensor so as to disturb the natural movements of the insects as little as possible.

The sensor unit 19 may comprise a local data processing system, preferably encased within the housing 9, configured for processing of the acquired sensor data indicative of the electric field strength at the measurement area 10. For example, the data processing system may be configured to process time-dependent measurements indicative of electric field strength, so as to provide frequency-resolved data. Additionally, the data processing system may be configured for pre-processing and/or post-processing of the acquired data. For example, pre- or post-processing may comprise filtering the acquired measurements, for example filtering using a bandpass filter, and/or enhancing the quality of the acquired measurements by applying a signal enhancement algorithm, for example a signal enhancement algorithm configured to reduce or remove nuisance background events, e.g. background noise. The data processing may be further configured for detection and/or classification and/or identification of one or more insects based at least in part on the measurements indicative of the electric field strength, such as on the frequency-resolved data. Alternatively, some or all of the processing steps may be performed by a data processing system external to the sensor unit 19. It will be appreciated that the data acquisition is performed locally in the sensor unit. The remaining signal and data processing tasks may be distributed in a variety of ways. For example, some or even all signal and/or data processing may be performed locally in the sensor unit. Similarly, some or even all signal and/or data processing tasks may be performed by an external data processing system.

For example, the processing of the acquired electric field sensor measurements may be performed locally by the sensor unit while the detection/classification/identification of one or more insect based at least in part on the acquired measurements may be performed by the external data processing system. Alternatively, the sensor unit may forward the acquired electric field sensor measurements to the external data processing system, which then performs both the processing of the measurements and the detection/classification/identification of one or more insects. Accordingly, depending on the distribution of processing tasks between the sensor unit and the external data processing system, the sensor data communicated from the sensor unit to the data processing system may have different forms. In some embodiments, only filtered and/or classified data need to be stored and/or sent thus reducing volume and cost of data delivery.

In some embodiments, the sensor unit 19 comprises or is communicatively coupled to one or more additional sensors, such as one or more environmental sensors for sensing environmental data, such as weather data. The one or more additional sensors may be deployed in the same geographic area as the sensor unit. Examples of environmental data include ambient temperature, humidity, amount of precipitation, wind speed, etc. The one or more additional sensors may be included in the sensor unit 19, in the vehicle, or they may be provided as a separate unit, e.g. a weather station, that may be communicatively coupled to one or more sensor units and/or to the external data processing system. For example, the acquired measurements indicative of the electric field strength may be combined with data from other types of sensors such as e.g. one or more optical sensors, one or more cameras, etc. The provision of multiple types of sensor data may have a number of uses, such as e.g. improving prediction accuracy of an algorithm for detection and/or classification and/or identification of an insect.

The measurements acquired, and possibly processed, by the sensor unit 19 may be stored locally by the sensor unit or by a vehicle, which the sensor is part of, for subsequent retrieval from the sensor unit, e.g. after a given time or after traversal of a geographic area. To this end, the sensor unit or vehicle may include a local data storage device for logging the data and for allowing the stored data to be retrievable e.g. via a data port or a removable data storage device.

An external data processing system 200, see fig. 2, may be configured, e.g. by a suitable computer program, to receive measurements indicative of electric field strength, such as measurements acquired by the sensor unit, and possibly other data such as e.g. position data, environmental data, etc., from the sensor unit 19. The external data processing system 200 may be a stand-alone computer or a system of multiple computers, e.g. a client-server system, a cloud-based system or the like. An example of an external data processing system will be described in more detail below.

The insect sensor system may be configured to acquire data on an electric field that is frequency modulated, where the modulation is in a frequency range between 0.01 kHz and 22 kHz, such as between 0.01 kHz and 5 kHz, such as between 0.01 kHz and 2 kHz, such as between 0.01 kHz and 1 kHz, such as between 0.01 kHz and 0.8 kHz. The insect sensor system may be configured to measure near-field electric fields.

Various insects may be detected by the insect sensor system, for example various freely flying insects 11, which are beating their wings, or perched insects 12, which may or may not be beating their wings (illustrated by curved motion lines) while sitting on a surface such as a plant or crop 13. The insect sensor system acquires measurements indicative of electric field strength and uses the acquired measurements to detect and/or classify and/or identify one or more insects at least in part on the basis of the acquired electric field sensor data.

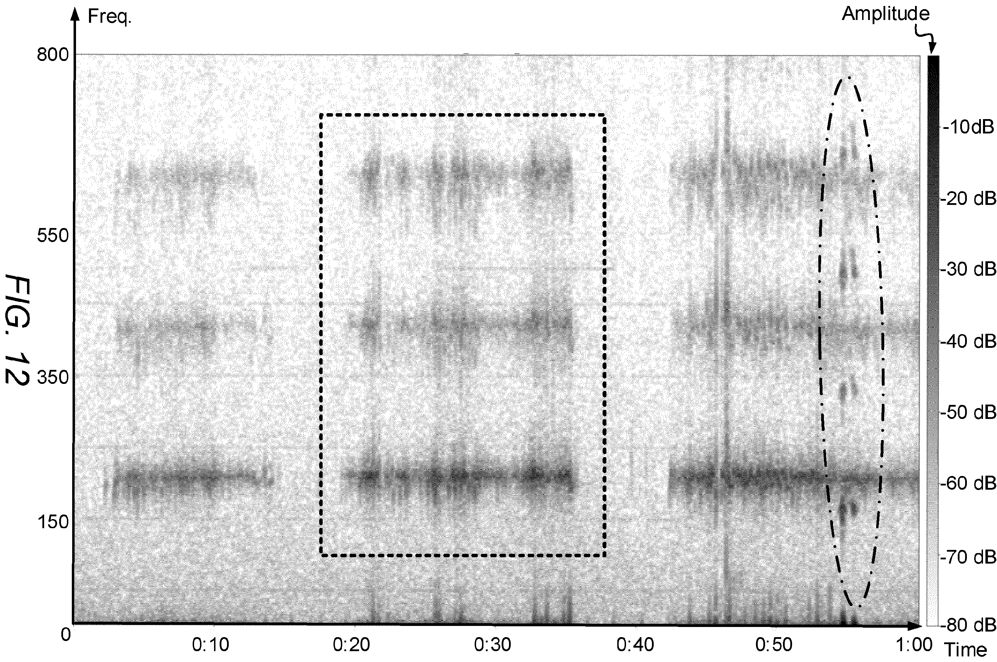

The data processing system may be configured to determine a representation of a distribution of signal power into frequency components based on the frequency-resolved data. For example, by determining a power spectrum, i.e. a one-dimensional representation of power as a function of frequency, or a power spectrogram, i.e. a two-dimensional representation of the variation of power over time and across different frequencies. Examples of power spectrograms based on frequency-resolved data from an insect sensor system are shown in figs. 12-16. Various characteristics of the determined power spectrum or power spectrogram may be analysed in order to detect and/or classify and/or identify one or more insects. For example, one or more spectral peaks, and/or number of spectral peaks, and/or a measure of a temporal variation of a determined frequency-domain characteristic may form part of the analysis. When determining one or more spectral peaks the shape and/or size of a peak may be determined, and further one or more of: peak amplitude, peak frequency, peak width, peak shape, and/or peak area may be determined. The classification of one or more insects may be based at least in part on the determined one or more of the mentioned frequency-domain characteristics. Alternatively, or additionally, the data processing system may be configured to determine one or more fundamental frequencies and/or one or more harmonics based on the frequency-resolved data, and to base the classification at least in part on the determined one or more fundamental frequencies and/or one or more harmonics. Further, a determination may be made of further frequency-domain features such as: absolute or relative energy of a fundamental frequency and/or of one or more harmonics, absolute or relative amplitude of a fundamental frequency and/or of one or more harmonics, absolute or relative bandwidth of a fundamental frequency and/or of one or more harmonics, and the classification may be based at least in part on the determined one or more frequency-domain features.

Thus, the insect sensor system may be configured to provide frequency-resolved data from the acquired measurements and to analyse the frequency-resolved data so as to classify one or more insects.

In some embodiments, the insect sensor system comprises a trained machine-learning model that is trained to classify acquired measurements into types of insect, for example by classifying frequency-resolved data and/or one or more signal embeddings derived from frequency-resolved data into an indication of an insect class. The insect sensor system may comprise a data processing system that is configured to perform the classification of the one or more insects at least by feeding the frequency-resolved data and/or one or more signal embeddings derived from the frequency-resolved data into a classification model, the classification model being configured to classify the frequency-resolved data and/or the one or more signal embeddings into an indication of an insect class associated with the frequency-resolved data and/or the one or more signal embeddings. The classification model may comprise a trained machine-learning model, in particular a trained neural network model, trained to derive an indication of an insect class associated from received frequency-resolved data and/or received one or more signal embeddings, and the data processing system may be configured to extract one or more signal embeddings from the frequency-resolved data and to feed the extracted signal embeddings into the classification model.

The sensor unit 19 shown in fig. 1 comprises wheels 17 as a propulsion mechanism and is self-propelled. Thus, the sensor unit 19 shown in fig. 1 may be a fully independent autonomous unit. Alternatively, the sensor unit 19 could be part of a manually driven, semi-autonomous or autonomous vehicle. For example, the sensor unit could be part of a tractor, a movable farming machine, a spraying boom, or other agricultural vehicle, an unmanned aerial vehicle (UAV), a self-driving robot, or the like. Yet alternatively, the sensor unit 19 may be configured as a purely stationary unit. The sensor unit 19 could thus be deployable anywhere, such as for movement on the ground 15, and be configured to continually or intermittently acquire measurements either from a fixed position or during traversal of an area.

A movable sensor unit 19 is intended to traverse a geographic area in which insects are to be detected. It will be appreciated that some embodiments may include multiple sensor units, e.g. as shown in fig. 7. It will be appreciated, that the number of sensor units, and whether they are movable, may be chosen depending on factors such as the size and variability of the geographic area, a desired accuracy of a resulting measure of insect activity, etc.

The sensor unit 19, or a vehicle it is part of, may comprise a position sensor, e.g. a GPS sensor, for tracking the position of the sensor unit while it traverses an area. Accordingly, the sensor unit system, or the vehicle, may record its position at respective times, e.g. at regular time intervals, e.g. so as obtain a sequence of time-stamped position coordinates.

FIG. 2 shows a schematic view of an insect sensor system, generally designated by reference numeral 1, according to some embodiments. The insect sensor system comprises a mobile sensor unit 19, which may be similar to that shown in fig. 1 except where noted otherwise, and a data processing system 200.

The sensor unit 19 comprises two electric field sensors 7', 7" mounted on the housing 9 and coupled to electronic components within the housing 9. The two electric field sensors are each part of a sensor module, where each of the sensor modules provides a single output based on the measurements acquired by the electric field sensor in the sensor module. The electric field sensors each comprise a measurement area 10', 10", which is sensitive to the electric field, and each of the electric field sensors can acquire measurements indicative of the electric field strength at their respective measurement area. In the embodiment shown in fig. 2, each sensor module comprises a single electric field sensor, but in other embodiments, a sensor module may comprise a plurality of electric field sensors.

The sensor unit 19 is communicatively coupled to the data processing system 200 and can communicate data, such as acquired measurements, processed or pre-processed, and other data, e.g. position data, to the data processing system 200. To this end, the sensor unit 19 may include a suitable communications interface. The communications interface may be a wired or a wireless interface configured for direct or indirect communication of data, such as sensor data, to the data processing system. The sensor unit 19 may communicate the acquired and/or processed data to the data processing system 200 via a cellular telecommunications network, e.g. via a GSM/GPRS network, USTM network, EDGE network, 4G network, 5G network or another suitable telecommunications network, such as e.g. a LoRa communication protocol, or via a wireless communications interface, e.g. via Bluetooth, BLE, RFID, WLAN, or another suitable wireless communications interface. In some embodiments, the communications interface may be configured for communication via satellite. It will be appreciated that the communication may be a direct communication or via one or more intermediate nodes. Similarly, the communication may use alternative or additional communications technologies, e.g. other types of wireless communication and/or wired communication.

Advantageously, the data processing system is configured to create a noise-reduced dataset based on the single output from each sensor module, i.e. based on two outputs, one from each sensor module, so as to reduce or remove common mode noise from the measurements. In some embodiments, the insect sensor system comprises more than two sensor modules, and preferably, the insect sensor system then comprises an even number of sensor modules, which are paired two-and-two such that a noise-reduced dataset is created for each sensor module pair. The noise reduction may be accomplished e.g. by differential measurements, whereby two dataset, typically taken substantially simultaneously or under very similar conditions, are subtracted one from the other. The idea being that noise or interference that affects both measurements will be reduced or cancelled out by taking the difference. Generally, a source of noise, which is sufficiently far away will give a substantially identical signal in each sensor, while an insect that is close by will give a different signal in each electric field sensor. A drawback to this type of noise reduction is that the signal from an insect, which is at equal distance to the measurement area of each electric field sensor, will be eliminated by the subtraction, but this may be a minor drawback compared to the noise reduction. In alternative embodiments, the signals from the two measurement areas 10', 10" are not used for producing noise-reduced datasets. In such embodiments, the measurement areas 10', 10" may provide a combined signal or separate signals. Separate signals from the two measurement areas 10', 10" may be used to determine a speed and/or a direction of movement of a detected insect 11, e.g. by utilising that the detected insect 11 produces a different signal in each of the two measurement areas 10', 10".

The data processing system is configured to detect and/or classify and/or identify one or more insects based at least in part on one or more noise-reduced datasets. The data processing system may be configured to process time-dependent measurements indicative of electric field strength such as one or more noise-reduced datasets to provide frequency-resolved data, and to detect and/or classify and/or identify one or more insects based at least in part on the frequency-resolved data. The data processing system may further be configured to analyse the frequency-resolved data as described in detail in connection with the description of fig. 1 with the frequency-resolved data being obtained by processing of one or more noise-reduced datasets.

As discussed in further detail in connection with the description of fig. 1, the data processing system may alternative be a local data processing system, e.g. a data processing system comprised in the sensor unit 19, or the processing tasks may be divided between a local and external data processing system.

The measurement area of any of the two electric field sensors 7', 7" in the paired sensor modules has a corresponding measurement area in the other sensor module of the pair, where the corresponding measurement area is of substantially equal size, and of substantially the same overall shape. In the embodiment shown in fig. 2, the corresponding measurement areas are each shaped as spherical domes, i.e. being hollow, or as semi-spheres. In other embodiments, the measurement areas may have other shapes. For some purposes, such as difference measurements, the paired measurements areas may need to be at least partially matched in size and/or shape.

Further, the corresponding measurement areas 10', 10" are configured and arranged to sense an electric field from at least parallel and opposite directions in that the measurement areas have their curved outer surfaces facing in opposite directions and are centrally arranged at opposite ends of a horizontal rod. This means that the measurement area 10' on the left in fig. 2 is able to sense at least an electric field line directed towards its outer curved surface and parallel to the horizontal rod with the same being true for the measurement area 10" on the right in fig. 2, the referenced electric field lines being opposite in directions and parallel. Such a setup may provide an enhanced directivity, which increases the sensitivity of the sensor.

In some embodiments, the diameter of the spherical domes or semi-spheres is between 4 and 20 cm, such as between 6 and 12 cm, such as between 9 and 11 cm. In some embodiments, the distance D between the paired sensor modules is between 15 and 45 cm, such as between 20 and 40 cm, such as between 25 and 35 cm. The distance D may be determined from the part of a measurement area of one sensor module to the closest measurement area in the other sensor module of the pair. Alternatively, the distance D may be determined as the distance between the centroid of corresponding measurement areas.

The insect sensor system is configured to allow insects to move about freely around and near the electric field sensors so as to disturb the natural movements of the insects as little as possible. Thus, the insect sensor system may provide an open space probe volume. The insect sensor system may advantageously be configured to provide a probe volume that is an enclosure-free void/space allowing unrestricted movement of living insects, such as living airborne insects, into and out of the enclosure-free void/space. The size and shape of the probe volume of the insect sensor system may be determined by the probe volume of each of the measurement areas and the positioning of them, such as their relative position. A larger a probe volume, e.g. due to large measurement areas, may be more susceptible to environmental noise than a smaller probe volume, while the signal originating from any insect is not increased by having a larger probe volume. Thus, the size and shape of the measurement area(s) may be optimized to have an appropriate signal to noise ratio.

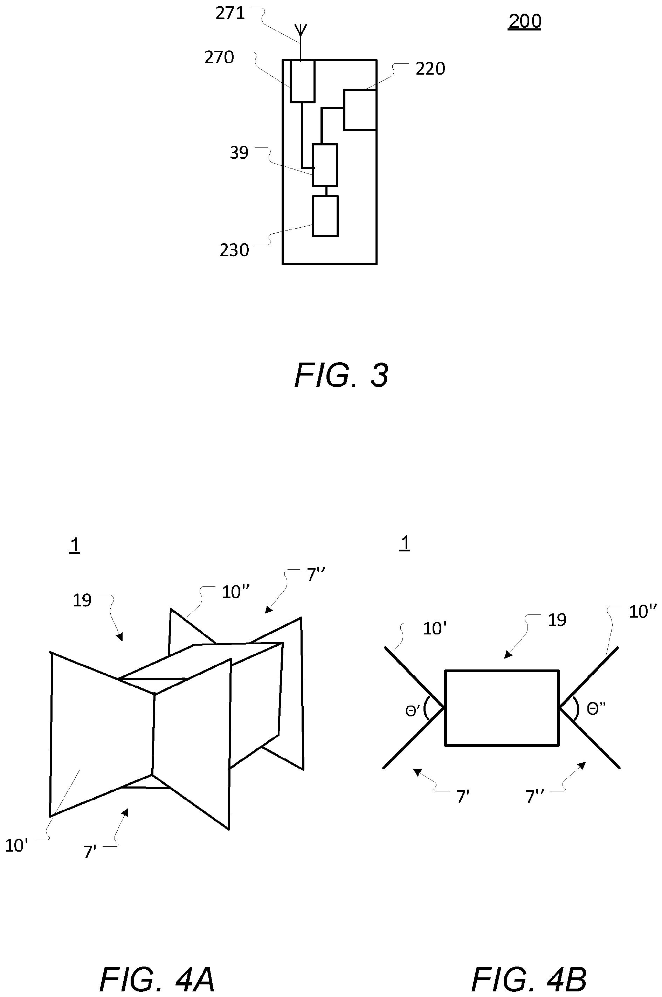

FIG. 3 shows a schematic view of a data processing system according to some embodiments. The data processing system 200 comprises a data processor 39. The data processor may preferably be a Digital Signal Processor (DSP), but may alternatively or additionally comprise a general- or special-purpose programmable microprocessor unit, such as a central processing unit (CPU) of a computer or of another data processing system, an application specific integrated circuits (ASIC), a programmable logic arrays (PLA), a field programmable gate array (FPGA), a special purpose electronic circuit, etc., or a combination thereof. The data processor 39 may be configured to execute signal processing algorithms and/or to perform real-time analysis. The data processing system further comprises a data storage device 230 for storing program code, received sensor data, and/or created insect distribution maps. Examples of suitable data storage devices include a hard disk, an EPROM, etc. The data processing system further may further comprise a data communications interface 270, e.g. a network adaptor, a GSM module or another suitable circuit for communicating via a cellular communications network or via another wireless communications technology. To this end, the data processing system may further comprise an antenna 271. It will be appreciated that the data processing system may include a wired data communications interface instead of or in addition to a wireless communication interface. The data processing system may receive data from a sensor unit via one or more nodes of a communications network. The data processing system may further comprise an output interface 220 e.g. a display, a data output port, or the like.

The data processing system 200 may be a stand-alone computer or a system of multiple computers, e.g. a client-server system, a cloud-based system or the like. The data processing system 200 may be configured to run a detection and/or classification and/or identification algorithm, so as to arrive at a detection, classification, and/or identification of an insect based at least in part on the measurements indicative of electric field strength acquired by the insect sensor system, such as based at least in part on frequency-resolved data and/or one or more signal embeddings derived from frequency-resolved data.

FIG. 4A and 4B shows a schematic view of at least part of an insect sensor system, generally designated by reference numeral 1, according to some embodiments. The insect sensor system comprises a sensor unit 19 configured for capture and digitalisation of signals resulting from measurements indicative of electric field strength for use in the detection and/or classification and/or identification of insects. In fig. 4A the insect sensor system is shown in a perspective view, while in fig. 4B the system is shown seen from above or below relative to the perspective view. The sensor unit 19 may be similar to those shown in figs. 1 and 2 except where noted otherwise.

The sensor unit 19 comprises two electric field sensors 7', 7" mounted on the housing 9 and coupled to electronic components within the housing 9. The electric field sensors each have a measurement area 10', 10" comprised of two plate-like elements arranged at an angle Θ to each other, where the angles Θ', Θ" may be the same or different. The angle Θ may be between 45 and 135 degrees, such as 60 and 120 degrees, such as 80 and 100 degrees.

The two electric field sensors 7', 7" may each be part of a sensor module as described in connection with fig. 2.

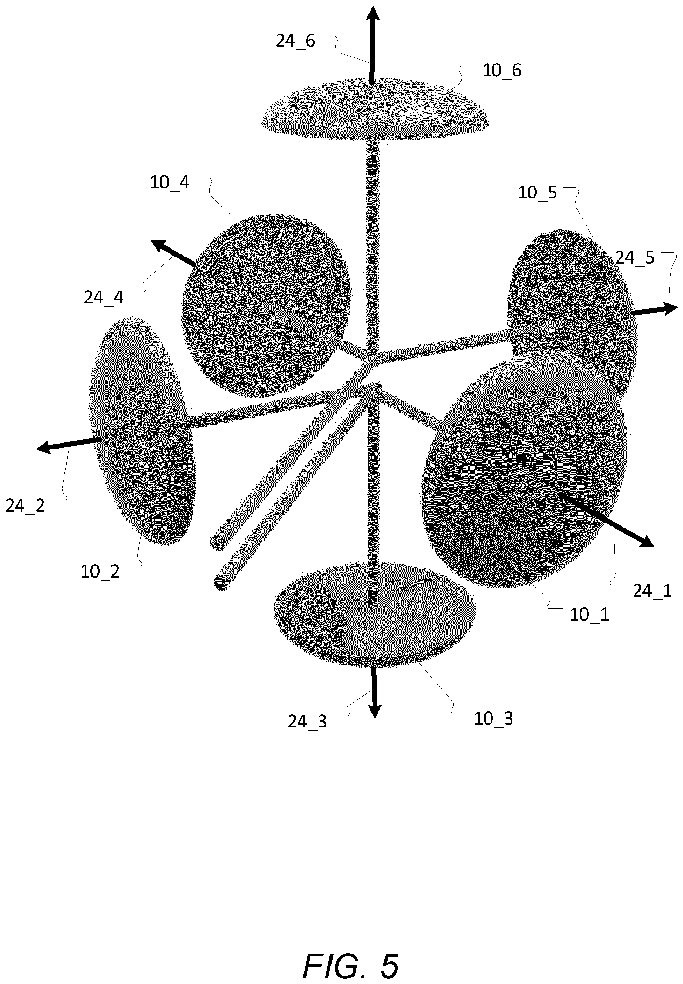

FIG. 5 shows a schematic view of an arrangement of electric field sensors for use in an insect sensor system according to some embodiments.

Fig. 5 shows six electric field sensors, each comprising a measurement area 10_1, 10_2, 10_3, 10_4, 10_5, 10_6, which is sensitive to the electric field, and each electric field sensor is configured to acquire measurements indicative of an electric field strength. Each of the six measurement areas are shaped similarly as spherical caps, but in other embodiments, they may be shaped differently. The six electric field sensors can be configured in various ways as part of an insect sensor system.

In some embodiments, the six electric field sensors each acquire measurements, which are treated separately in the detection and/or classification and/or identification of insects. A data processing system configured to receive and process signals from the electric field sensors may be configured to determine a speed and/or a direction of movement of an insect detected based on the measurements from the electric field sensors by utilising that the detected insect produces a different signal in each of the measurement areas.

In other embodiments, the six electric field sensors are either paired with another measurement area or arranged to each be part of a sensor module that is paired with another sensor module also comprising at least one electric field sensor. By pairing sensor modules, the electric field sensors may be arranged in one, two, or three pairs of sensor modules, where three pairs of sensor modules mean that each sensor module comprises a single one of the six electric field sensors, while less than three pairs of sensor modules means that one or more of the sensor modules comprise more than one electric field sensor.

Each sensor module produces a single output, and thus, in embodiments where one or more of the sensor modules comprise more than one electric field sensor, the output from two or more electric field sensors are combined in a single sensor module output.

As part of an insect sensor system, a data processing system is configured to process the measurements acquired by the electric field sensors. In embodiments, where the electric field sensors are arranged in paired sensor modules, the data processing system is configured to create a noise-reduced dataset for each sensor module pair based on the single output from each sensor module in the respective pair of sensor modules so as to reduce or remove common mode noise from the measurements.

Where time-dependent measurements were acquired, the data processing system may be configured to process the time-dependent measurements to provide frequency-resolved data. The time-dependent measurements may be acquired by the electric field sensors, whether they are arranged in sensor module pairs or not. Thus, the data processing system may be configured to process time-dependent measurements that were noise-reduced or not.

Based on the processed data, e.g. based on frequency-resolved data, or a noise-reduced dataset, or a frequency-resolved noise-reduced dataset, the data processing system may detect and/or classify and/or identify one or more insects.

In a preferred embodiment, the electric field sensors are configured and arranged such that the six measurement areas 10_1, 10_2, 10_3, 10_4, 10_5, 10_6 are each part of a sensor module, where the first measurement area 10_1 is comprised in a first sensor module, the second measurement area 10_2 is comprised in a second sensor module, etc., and where the first sensor module is paired with the fourth sensor module, the second sensor module is paired with the fifth sensor module, and the third sensor module is paired with the sixth sensor module. In this way, each sensor module is paired with a sensor module in which the measurement area of the electric field sensor comprised therein is configured and arranged to sense an electric field from at least substantially parallel and opposite directions. The measurement area in each of the paired sensor modules may be said to be corresponding as described herein. Corresponding measurement areas may have a primary direction, which may be defined as the normal direction of the plane of largest projection area of the measurement area. The normal direction of the plane of largest projection area of the measurement area for each of the six measurement areas is shown in fig. 5 with the general reference number 24. Thus, in this configuration, each sensor module is configured to be sensitive to an electric field from at least an opposite or perpendicular direction relative to the other sensor modules. This may also be described as at least one normal vector to a respective measurement area is substantially perpendicular to at least one normal vector of a measurement area of a sensor module belonging to a different pair of sensor modules.

In another preferred embodiment, the electric field sensors are configured and arranged such that the six measurement areas 10_1, 10_2, 10_3, 10_4, 10_5, 10_6 are arranged in two sensor modules such that each sensor module comprises three measurement areas having a primary direction that is perpendicular to each other. For example, the first, second, and third measurement areas 10_1, 10_2, 10_3 may belong to a sensor module, and the fourth, fifth, and sixth measurement areas 10_4, 10_5, 10_6 to another sensor module. In this way, the plurality of measurement areas in each sensor module are each configured such that at least one normal vector to the respective measurement area is substantially perpendicular to at least one normal vector of each of the remaining measurement areas in the sensor module.

The measurement area of each of the one or more electric field sensors, or the combined measurement area of each of the sensor modules, is larger than 0.5 cm², such as larger than 0.7 cm², such as larger than 0.8 cm², such as larger than 0.9 cm², such as larger than 1 cm², such as larger than 2cm², such as larger than 3 cm², such as larger than 6 cm², and/or the measurement area of each of the one or more electric field sensors, or the combined measurement area of each of the sensor modules, is between 0.5 cm² and 500 cm², such as between 0.7 cm² and 470 cm², such as between 0.8 cm² and 450 cm², such as between 0.9 cm² and 430 cm², such as between 1 cm² and 400 cm², such as between 2 cm² to 300 cm², such as between 6 cm² to 250 cm².

The six measurement areas 10_1, 10_2, 10_3, 10_4, 10_5, 10_6 are spaced apart such that the distance between paired sensor modules, or paired measurement areas, or the centroid of corresponding measurement areas, is between 0.05 m and 3 m, such as between 0.1 m and 2 m, such as between 0.15 m and 1.5 m, such as between 0.2 and 1 m, such as between 0.25 and 0.5 m, and/or the distance between paired sensor modules, or paired measurement areas, or the centroid of corresponding measurement areas, is equal to or larger than 0.05 m, such as equal to or larger than 0.1 m, such as equal to or larger than 0.15 m, such as equal to or larger than 0.2 m, such as equal to or larger than 0.25 m

FIG. 6A schematically illustrates a more detailed view of electronic components of a sensor unit according to some embodiments. The sensor unit 19 of fig. 6A may be similar to the sensor unit of other figures and comprises a local data processing system 30 accommodated within a housing 9, e.g. as described in connection with fig. 1.

The local data processing system 30 is configured to process signals from one or more electric field sensors coupled to the local data processing system, for example to pre-process an analog raw signal and/or process a digital signal. The local data processing system may receive an analog raw signal via an input line 31, the raw signal being representative of measurements acquired by an electric field sensors. The raw signal may be pre-processed by a filter 32, which is configured to reduce noise in the received signal. The filtered signal is then fed into an amplifier bank 33 comprising one or more amplifiers, such as one or more high impedance amplifiers and/or one or more high impedance differential amplifiers and/or one or more instrumentation amplifiers, which are configured to detect and amplify high impedance signals. Following this, the signal is fed into an amplifier (Amp) 35 for standard amplification. The amplified signals are then fed into an A/D (analog to digital) converter bank 37, which includes one or more A/D converters. The A/D converter bank 37 generates digital signals, which may be sent to a data processor 39. The data processor may preferably be a Digital Signal Processor (DSP), but may alternatively or additionally comprise a general- or special-purpose programmable microprocessor unit, such as a central processing unit (CPU) of a computer or of another data processing system, an application specific integrated circuits (ASIC), a programmable logic arrays (PLA), a field programmable gate array (FPGA), a special purpose electronic circuit, etc., or a combination thereof. The data processor 39 may be configured to execute signal processing algorithms and/or to perform real-time analysis. The data processor 39 may perform one or more analyses on the digital signals using various methodologies so as to provide processed data, which are sent to a data storage 41. The stored data can later be extracted from the sensor unit 19 and studied further, for example by an external data processing system as shown in fig. 3.

FIG. 6B schematically illustrates a more detailed view of electronic components of a sensor unit according to some embodiments. The sensor unit 19 of fig. 6B may be similar to the sensor unit of other figures and comprises a local data processing system 30 accommodated within a housing 9, e.g. as described in connection with fig. 1.

The local data processing system 30 is configured to process signals from one or more electric field sensors coupled to the local data processing system, for example to pre-process an analog raw signal and/or process a digital signal. The local data processing system may receive an analog raw signal via an input line 31, the raw signal being representative of measurements acquired by an electric field sensors. The local data processing system 30 comprises an optional filter 32, an amplifier bank 33, an amplifier 35, and A/D converter bank 37 as described in connection with fig. 6A. The digital signals generated by the A/D converter bank 37 are sent to a digital data recorder 43, which stores the raw pre-processed digital signals. From the digital data recorder, or from the A/D converter bank 37, the raw digital signals are sent to a data processor 39 as also described in connection with fig. 6A. The data processor 39 may perform one or more analyses on the digital signals using various methodologies so as to provide processed data, which are sent to the digital data recorder 43. Thus, the sensor unit 19 stores both the raw pre-processed data as well as the processed data. The stored data, both raw and processed or either, can later be extracted from the sensor unit 19 and studied further, for example by an external data processing system as shown in fig. 3.

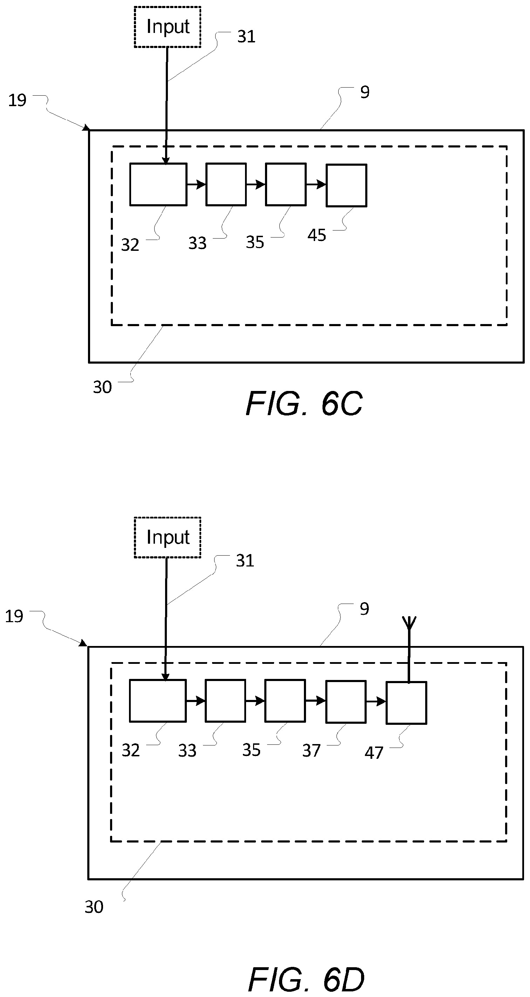

FIG. 6C schematically illustrates a more detailed view of electronic components of a sensor unit according to some embodiments. The sensor unit 19 of fig. 6C may be similar to the sensor unit of other figures and comprises a local data processing system 30 accommodated within a housing 9, e.g. as described in connection with fig. 1.

The local data processing system 30 is configured to process signals from one or more electric field sensors coupled to the local data processing system, for example to pre-process an analog raw signal and/or process a digital signal. The local data processing system may receive an analog raw signal via an input line 31, the raw signal being representative of measurements acquired by an electric field sensors. The local data processing system 30 comprises an optional filter 32, an amplifier bank 33, and an amplifier 35 as described in connection with fig. 6A. Amplified signals from the amplifier 35 are sent to a digital audio recorder 45, such as a standard commercial digital audio recorder. The digital audio recorder digitalises and stores the raw pre-processed digital signals. Thus, the sensor unit 19 stores the raw pre-processed data, which can later be extracted from the sensor unit 19 and studied further, for example by an external data processing system as shown in fig. 3. The sensor unit described in connection with fig. 6C has a lower power consumption in comparison with the embodiments shown in figs. 6A and 6B, due to the lower power requirement of its components, and generally speaking a very low power consumption.

FIG. 6D schematically illustrates a more detailed view of electronic components of a sensor unit according to some embodiments. The sensor unit 19 of fig. 6D may be similar to the sensor unit of other figures and comprises a local data processing system 30 accommodated within a housing 9, e.g. as described in connection with fig. 1.

The local data processing system 30 is configured to process signals from one or more electric field sensors coupled to the local data processing system, for example to pre-process an analog raw signal and/or process a digital signal. The local data processing system may receive an analog raw signal via an input line 31, the raw signal being representative of measurements acquired by an electric field sensors. The local data processing system 30 comprises an optional filter 32, an amplifier bank 33, an amplifier 35, and A/D converter bank 37 as described in connection with fig. 6A. The A/D converter bank 37 generates digital signals, which are sent to a communications interface 47, such as e.g. a BLE (Bluetooth Low Energy) data transmitter. A BLE transmitter uses little energy and allows for the data to be sent real-time to an external data processing system such as the data processing system 200 shown in figs. 2 and 3.

Alternatively, the amplified signals may be sent to a communications interface, which can digitise the signal prior to transmission, such as e.g. a digital wireless audio transmitter. This allows the data to be sent real-time to an external data processing system such as the data processing system 200 shown in figs. 2 and 3, while reducing the power consumption of the sensor unit by not requiring local processing power.

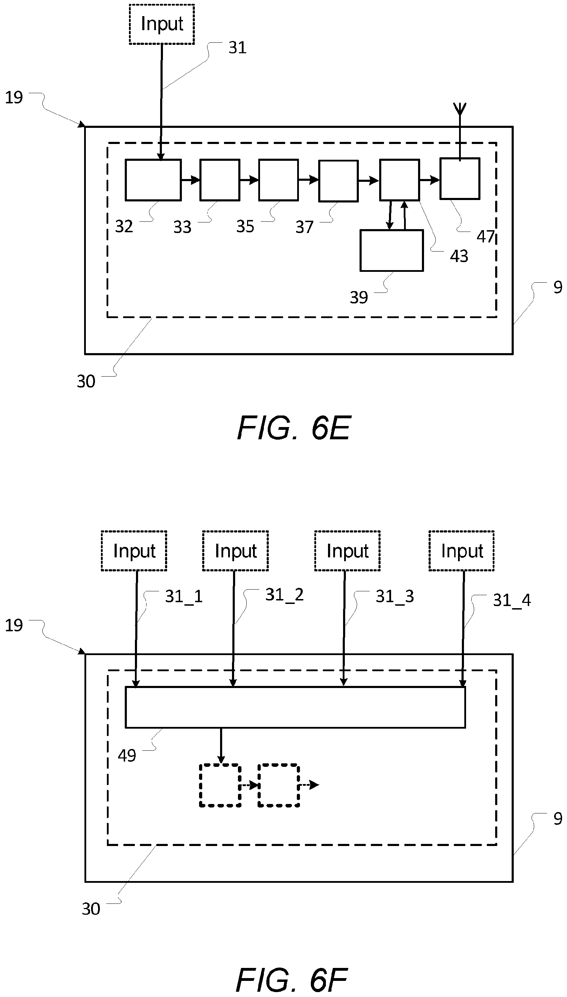

FIG. 6E schematically illustrates a more detailed view of electronic components of a sensor unit according to some embodiments. The sensor unit 19 of fig. 6E may be similar to the sensor unit of other figures and comprises a local data processing system 30 accommodated within a housing 9, e.g. as described in connection with fig. 1.

The local data processing system 30 is configured to process signals from one or more electric field sensors coupled to the local data processing system, for example to pre-process an analog raw signal and/or process a digital signal. The local data processing system may receive an analog raw signal via an input line 31, the raw signal being representative of measurements acquired by an electric field sensors. The local data processing system 30 comprises an optional filter 32, an amplifier bank 33, an amplifier 35, and A/D converter bank 37 as described in connection with fig. 6A. The digital signals generated by the A/D converter bank 37 are sent to a digital data recorder 43, which stores the raw pre-processed digital signals. From the digital data recorder, or from the A/D converter bank 37, the raw digital signals are sent to a data processor 39 as also described in connection with fig. 6A. The data processor 39 may perform one or more analyses on the digital signals using various methodologies so as to provide processed data, which are sent to the digital data recorder 43. Thus, the sensor unit 19 stores both the raw pre-processed data as well as the processed data. The local data processing system 30 further comprises a communications interface 47, which may be configured to transmit the processed data, and possibly also the raw data. The communications interface 47 may advantageously be a low power and/or long range loT device such as a communications interface using the LoRa communication protocol. The sensor unit shown 19 in fig. 6E may thus be configured to record and process the signal, and further to transmit processed data in near real-time.

FIG. 6F schematically illustrates a more detailed view of electronic components of a sensor unit according to some embodiments. The sensor unit 19 of fig. 6F may be similar to the sensor unit of other figures and comprises a local data processing system 30 accommodated within a housing 9, e.g. as described in connection with fig. 1.

The local data processing system 30 is configured to process signals from one or more electric field sensors coupled to the local data processing system, for example to pre-process an analog raw signal and/or process a digital signal. The local data processing system may receive an analog raw signal via four input lines 31_1, 31_2, 31_3, 31_4, the raw signal being representative of measurements acquired by an electric field sensors. Each raw signal is fed into a multiplexer 49, which acts to combine the input from the plurality of electric field sensors to provide a single output to the further components of the local data processing system, illustrated with dotted boxes, such as e.g. a filter (optional), an amplifier bank, an amplifier, an A/D converter bank, etc. as described in connection with figs. 6A-6E.

A sensor unit 19 comprising a plurality of electric field sensors may increase the probe volume, i.e. the volume within which an insect may be detected by the insect sensor system. This may reduce the cost and number of devices needed to cover a geographic area.

The sensor unit 19 may be further configured to make use of the differential signal from a plurality of electric field sensors. For example, the sensor unit may be configured to reject signals that are common to two or more of the electric field sensors as such signals are likely external noise. As another example, the sensor unit may be configured to enhance signals that are different from two or more of the electric field sensors as such signals may originate from an insect that is closer to one electric field sensor than to one or more of other electric field sensors.

FIG. 7 shows a schematic view of an insect sensor system comprising a plurality of sensor units 19 and a central receiver 51 according to some embodiments. Each sensor unit 19 may comprise one or more electric field sensors, where a plurality of electric field sensors may be arranged in two or more sensor modules paired two-and-two as described herein.

Each sensor units 19 in the plurality of sensor units may be configured as low power consumption units without processing power. Each of the sensor units may comprise a communications interface, such as e.g. BLE, through which it is communicatively coupled to the central receiver 51. The central receiver may comprise at least two communications interfaces: a suitable communications interface for communication with the sensor units 19, illustrated by dash-dot lines, and a suitable communications interface for long-range transmission, illustrated by a dotted line, of the data received from the plurality of sensor units 19. For example, the communications interface for long-range transmission may be a cellular telecommunications network, e.g. such as a GSM/GPRS network, USTM network, EDGE network, 4G network, 5G network or another suitable telecommunications network, such as e.g. a LoRa communication protocol. In some embodiments, the communications interface may be configured for communication via satellite. It will be appreciated that the communication may be a direct communication or via one or more intermediate nodes. The direct or intermediate communication may be to or via an antenna node 53. Similarly, the communication may use alternative or additional communications technologies, e.g. other types of wireless communication and/or wired communication. The plurality of sensor units 19 may send data to the central receiver using a mesh network to increase range and coverage.

FIG. 8 shows a process flow from acquiring of time-dependent measurements indicative of electric field strength to a spectral analysis on the acquired measurements according to some embodiments.

A sensor unit comprising one or more electric field sensors, an A/D converter, and a microcontroller is shown on the left of fig. 8. The sensor unit may comprise further components, for example as described in figs. 6A - 6F. The one or more electric field sensors acquire an analog signal representing time-dependent measurements indicative of electric field strength. The analog signal is input to an analog-to-digital converter, where it is converted to a digital signal. A microcontroller may perform pre-processing or processing of the digital signal before forwarding the signal to a cloud server, where it may be stored. The cloud server may perform further processing of the measurements, for example as described in connection with fig. 12.

On the right of fig. 8 is shown an external data processing system, which can retrieve the signal stored in the cloud server. The retrieved digital signal is loaded into the data processing system following which the signal may undergo a spectral analysis. For example, the data processing system may determine a representation of a distribution of signal power into frequency components, such as a power spectrum or a power spectrogram, based on the frequency-resolved data. An example of a power spectrogram is shown in fig. 8 as following from the spectral analysis of the retrieved digital signal.

The data processing system may perform further processing on the retrieved digital signal such as determining one or more frequency-domain characteristics, determining one or more fundamental frequencies and/or one or more harmonics of a temporal modulation of the measured electric field strength based on the frequency-resolved data, and/or determining one or more frequency-domain features as described herein.

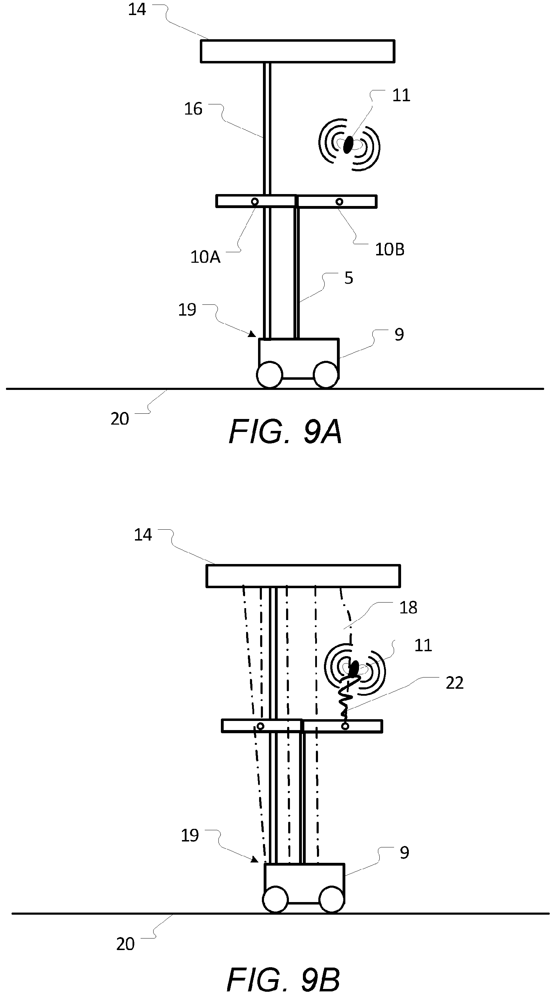

FIGS. 9A and 9B show schematic views of an insect sensor system, generally designated by reference numeral 1, according to some embodiments. The insect sensor system comprises a mobile sensor unit 19, which may be similar to those shown in figs. 1 and/or 2, except where noted otherwise.

The sensor unit 19 comprises an electric field generator 14, which is coupled to the rest of the sensor unit via a generator rod 16 mounted on the housing 9. The electric field generator may generate a static electric field or a frequency modulated electric field with a selected frequency or frequency band.

The sensor unit 19 is shown as moving across a surface 20, such as a floor, or alternatively the ground. The generated electric field may extend between a surface of the electric field generator 14 and the floor 20. Alternatively, or additionally, the generated electric field may extend between the electric field generator 14 and another part of the sensor unit 19, or between the electric field generator 14 and the ground. The sensor unit is configured such that the measurement areas 10A, 10B of two electric field sensors are comprised, wholly or partly, within the generated electric field. A generated electric field may advantageously facilitate the detection/classification/identification of insects within the probe volume of the insect sensor system and/or within the volume of generated electric field. The insect sensor system may be configured such that insects 11 can move freely into and out of the generated electric field.

In fig. 9B is illustrated an artistic rendition of electric field lines extending between the electric field generator 14 and the top of the housing 9 of the sensor unit 19. The generated electric field may be affected by the presence of the insect 11 causing a variation in the electric field which may be measurable by one or more electric field sensors of the insect sensor system.

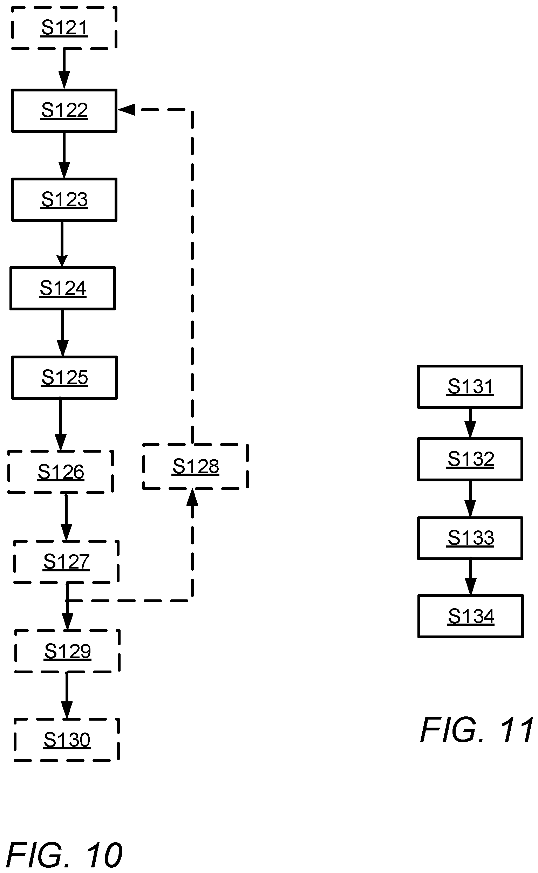

FIG. 10 shows a schematic flow diagram of a method for detection and/or classification and/or identification of insects according to some embodiments.

In optional step S121, an insect sensor system for detection of insects as described herein is provided. The insect sensor system comprises a data processing system and one or more electric field sensors configured to acquire measurements indicative of electric field strength.

In step S122, measurements indicative of electric field strength are acquired. The measurements may be acquired as time-dependent measurements indicative of electric field strength and acquired from one or more electric field sensors, each electric field sensor being configured to being sensitive to the electric field strength in a respective measurement area. Alternatively, the measurements may be acquired by an even number of sensor modules paired two-and-two, each sensor module providing a single output based on the acquired measurements. Measurements acquired by sensor modules may be time-dependent.

The measurements acquired by the electric field sensor(s) may be associated with the position of the electric field sensor, which acquires the measurements and/or with the position of the insect sensor system and/or a sensor unit, which the electric field sensor is part of. To this end, the process may further acquire sensor position data indicative of the position of the insect sensor system and/or of the individual electric field sensor(s) and/or the sensor unit at respective times, such as e.g. GPS data.

In step S123, the acquired measurements are processed. Time-dependent measurements are processed to provide frequency-resolved data and/or measurements acquired by sensor modules are processed to create a noise-reduced dataset for each sensor module pair based on the single output from each sensor module in the respective pair of sensor modules so as to reduce or remove common mode noise from the measurements. For example, the method step may comprise time-dependent measurements acquired by sensor modules being processed to create a noise-reduced dataset for each sensor module pair based on the single output from each sensor module in the respective pair of sensor modules so as to reduce or remove common mode noise from the measurements followed by the time-dependent measurements acquired by sensor modules being further processed to provide frequency-resolved data.

In step S124, frequency-resolved data may be further processed and one or more additional method steps may be performed.

In some embodiments, the method further comprises a step of determining a representation of a distribution of signal power into frequency components, such as a power spectrum or a power spectrogram, based on the frequency-resolved data.

In some embodiments, the method further comprises a step of determining one or more frequency-domain characteristics, such as one or more spectral peaks, based on the frequency-resolved data. In some embodiments, determining one or more frequency-domain characteristics comprises determining one or more spectral peaks, and/or number of spectral peaks, and/or a measure of a temporal variation of a determined frequency-domain characteristic. In some embodiments, determining one or more spectral peaks further comprises determining a measure of a shape and/or size and/or strength of a determined spectral peak. In some embodiments, determining one or more spectral peaks, and/or determining a measure of a shape and/or size and/or strength of a determined spectral peak comprises determining one or more of: peak amplitude, peak frequency, peak width, peak shape, and/or peak area. For example, as a measure of the strength of a peak the equivalent width of the peak may be determined. Alternative, or additionally, other suitable measures may be used to determine the strength of a peak.

In some embodiments, the method further comprises a step of determining one or more fundamental frequencies and/or one or more harmonics of a temporal modulation of the measured electric field strength based on the frequency-resolved data.

In some embodiments, the method further comprises a step of determining one or more of the following frequency-domain features:
- absolute or relative energy of a fundamental frequency and/or of one or more harmonics,
- absolute or relative amplitude of a fundamental frequency and/or of one or more harmonics,
- absolute or relative bandwidth of a fundamental frequency and/or of one or more harmonics.

In step S125, one or more insects are detected and/or classified based at least in part on the processed data or datasets. For example, one or more insects are detected or classified based at least in part on frequency-resolved data or one or more insects are detected or classified based at least in part on one or more noise-reduced datasets as described herein. If the frequency-resolved data was further processed in step 124, the detection and/or classification may be based at least in part on one or more of: the determined representation of a distribution of signal power into frequency components, the determined one or more frequency-domain characteristics, the determined one or more fundamental frequencies and/or determined one or more harmonics and/or the determined one or more frequency-domain features.

Based at least on sensor position data, the process may associate the one or more classified insects with a corresponding measurement position at which the measurements were recorded. Alternatively, the process may associate the one or more classified insects with a position in a different manner.

Optionally, in step 126, an identification of one or more insects based at least in part on the processed data or datasets is performed. For example, one or more insects may be identified based at least in part on frequency-resolved data or on one or more noise-reduced datasets.

Optionally, in step S127, a measure of insect activity based at least in part on the detected and/or classified and/or identified one or more insects is calculated. The measure of insect activity is indicative of insect activity in the geographic area around the electric field sensor and/or is indicative of insect activity in the area traversed by a movable sensor unit comprising the electric field sensor.

Based at least on sensor position data, the process may associate the measure of insect activity with a corresponding measurement position. Alternatively, the process may associate measure of insect activity with a position in a different manner.

Optionally, the calculation of the measure of insect activity may be based on additional input. For example, on information indicative of one or more anticipated insects in the area, locality information relating to the locality conditions, and/or on historical data e.g. related to insect activity in the area. The calculation of the measure of insect activity may be based on a previously calculated measure of insect activity, for example on a measure of insect activity calculated from previously recorded sensor data.

Optionally, in step S128, the process of acquiring measurements indicative of electric field strength is repeated as one or more electric field sensors or one or more sensor units acquires further measurements at a given position or by the one or more electric field sensors or one or more sensor units acquiring further measurements during traversal of a geographic area. The additional electric field sensor measurements may have a number of uses, such as e.g. facilitating classification and/or identification of one or more insects, improving the accuracy of the calculated measure of insect activity, etc.

Optionally, in step S129, one or more local insect control measures are determined based at least on the detected and/or classified and/or identified one or more insects and/or on the measure of insect activity. Insect control measures may be any of a plurality of known insect control measures, such as e.g. the release of beneficial insects and/or biological agents for reducing or suppressing undesired insect activity. For example, the process may determine that an insecticide should be sprayed due to the calculated insect activity measure being above a predetermined threshold. The spraying may be executed by a vehicle on which at least one or more electric field sensors of the insect sensor system is mounted or the spraying may be executed by another vehicle, such as framing vehicle, or other movable device for performing a suitable insect control measure. The type of insect control measure used may be based on an determination of one or more specific species of insect, and the process may be configured to select the type of insecticide or other insect control measure automatically so as to selectively target the determined one or more species of insects.

Optionally, in step S130, an insect activity control device is controlled to perform one or more of the determined local insect control measures in the area, where the measurements by one or more electric field sensor were acquired.

FIG. 11 shows a schematic flow diagram of a computer-implemented method for detection and/or classification and/or identification of insects according to some embodiments.

In step S131, acquired measurements indicative of electric field strength from one or more electric field sensors are received. The measurements may be acquired as time-dependent measurements indicative of electric field strength and acquired from one or more electric field sensors. Alternatively, the measurements may be acquired by an even number of sensor modules paired two-and-two, each sensor module providing a single output based on the acquired measurements. Measurements acquired by sensor modules may be time-dependent.

In step S132, the received measurements are processed. Time-dependent measurements are processed to provide frequency-resolved data and/or measurements acquired by sensor modules are processed to create a noise-reduced dataset for each sensor module pair based on the single output from each sensor module in the respective pair of sensor modules so as to reduce or remove common mode noise from the measurements. For example, the method step may comprise time-dependent measurements acquired by sensor modules being processed to create a noise-reduced dataset for each sensor module pair based on the single output from each sensor module in the respective pair of sensor modules so as to reduce or remove common mode noise from the measurements followed by the time-dependent measurements acquired by sensor modules being further processed to provide frequency-resolved data.

In step S133, frequency-resolved data may be further processed and one or more additional method steps may be performed.

In some embodiments, the method further comprises a step of determining a representation of a distribution of signal power into frequency components, such as a power spectrum or a power spectrogram, based on the frequency-resolved data.

In some embodiments, the method further comprises a step of determining one or more frequency-domain characteristics, such as one or more spectral peaks, based on the frequency-resolved data. In some embodiments, determining one or more frequency-domain characteristics comprises determining one or more spectral peaks, and/or number of spectral peaks, and/or a measure of a temporal variation of a determined frequency-domain characteristic. In some embodiments, determining one or more spectral peaks further comprises determining a measure of a shape and/or size and/or strength of a determined spectral peak. In some embodiments, determining one or more spectral peaks, and/or determining a measure of a shape and/or size and/or strength of a determined spectral peak comprises determining one or more of: peak amplitude, peak frequency, peak width, peak shape, and/or peak area. For example, as a measure of the strength of a peak the equivalent width of the peak may be determined. Alternative, or additionally, other suitable measures may be used to determine the strength of a peak.

In some embodiments, the method further comprises a step of determining one or more fundamental frequencies and/or one or more harmonics of a temporal modulation of the measured electric field strength based on the frequency-resolved data.

In some embodiments, the method further comprises a step of determining one or more of the following frequency-domain features:
- absolute or relative energy of a fundamental frequency and/or of one or more harmonics,
- absolute or relative amplitude of a fundamental frequency and/or of one or more harmonics,
- absolute or relative bandwidth of a fundamental frequency and/or of one or more harmonics.

In step S134, one or more insects are detected and/or classified based at least in part on the processed data or datasets. For example, one or more insects are detected or classified based at least in part on frequency-resolved data or one or more insects are detected or classified based at least in part on one or more noise-reduced datasets as described herein. If the frequency-resolved data was further processed in step 124, the detection and/or classification may be based at least in part on one or more of: the determined representation of a distribution of signal power into frequency components, the determined one or more frequency-domain characteristics, the determined one or more fundamental frequencies and/or determined one or more harmonics and/or the determined one or more frequency-domain features.

The computer-implemented method may be performed on a data processing system such as a data processing system as disclosed herein.

FIG. 12 shows an example of a power spectrogram based on acquired measurements indicative of electric field strength. Time-dependent measurements were acquired by one or more electric field sensors as variations in each sensor's output voltage. The voltage variations were converted into digital signals by an analog-to-digital converter module, specifically a Cirrus Logic CS5343/4. Then, the digital signals were transmitted to an ESP32 microcontroller, which sent them to a cloud-based server for further analysis. The signal was divided into smaller time segments using Short-Time Fourier Transform (STFT) by the cloud-based server. Each time segment was analysed in order to create a power spectrum of the distribution of energy across different frequencies. The spectral values are organized into bins and used to form a spectrogram.

To facilitate visualization and interpretation, the amplitudes in the spectrogram were converted into decibels (dB). This transformed spectrogram may then be visualized as the heat map shown in fig. 12 with time on the horizontal axis and frequency (Hz) on the vertical axis. The heat map provides a visual representation of how the frequency content of the electric field changes over time, facilitating the determination of e.g. dominant frequencies, amplitude variations, and/or temporal patterns within the signal.

The spectrogram data may be analysed to determine characteristic patterns, i.e. signatures, of one or more insects. In the shown spectrogram, at least two insect signatures are visible in the heat map, shown within respectively a dotted box and a dash-dotted oval. The signature in the dotted box is known to be caused by a bee, while the one or more signatures in the dash-dotted oval is caused by one or more, as yet, unknown insects.

Also visible in the spectrogram as background noise is the 50 Hz utility line signal and harmonics thereof.

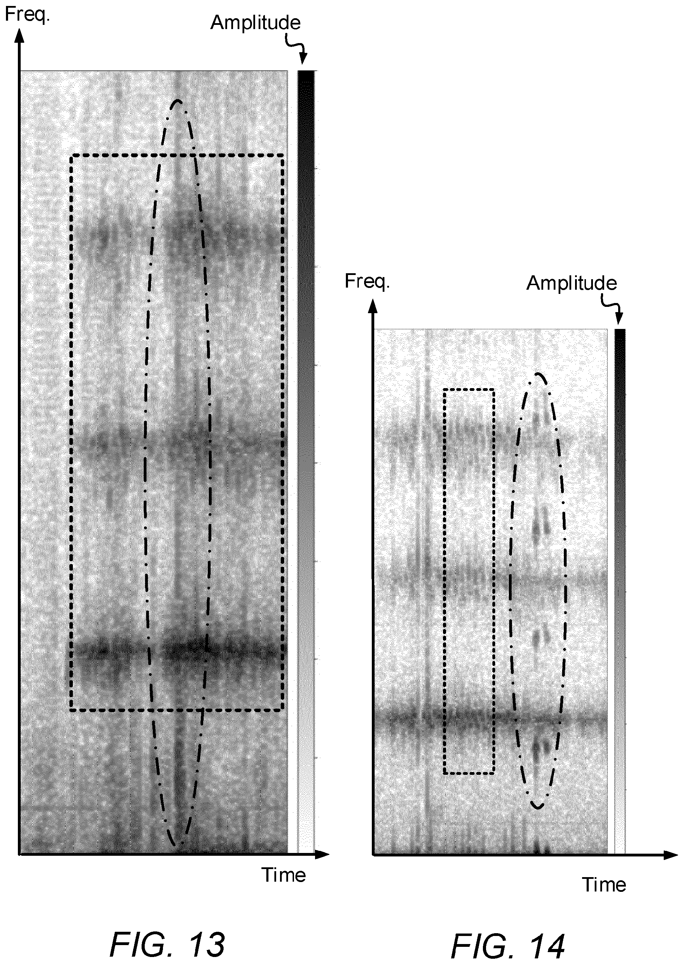

FIG. 13 shows an example of a power spectrogram based on acquired measurements indicative of electric field strength. The spectrogram was produced by a processing of measurements indicative of electric field strength as described above in connection with fig. 12.

The spectrogram shows at least two insect signatures, where the signature in the dotted box is known to be caused by a bee, while the one or more signatures in the dash-dotted oval is caused by one or more, as yet, unknown insects.

The power spectrogram illustrates how insect signatures could possibly be characterised and distinguished by the difference in the temporal length of their respective signals, although this is also heavily dependent on the time the insect spends within a volume in which its effect on the electric field at a measurement area is measurable. Where the bee is seen as a relatively extended signal temporally, the signature(s) in the dash-dotted oval is relatively short temporally.

FIG. 14 shows an example of a power spectrogram based on acquired measurements indicative of electric field strength. The spectrogram was produced by a processing of measurements indicative of electric field strength as described above in connection with fig. 12.

The power spectrogram in fig. 14 shows at least two insect signatures, where the signature in the dotted box is known to be caused by a bee, while the one or more signatures in the dash-dotted oval is caused by one or more, as yet, unknown insects. The power spectrogram illustrates how insect signatures may be characterised and distinguished by variations in the frequency.

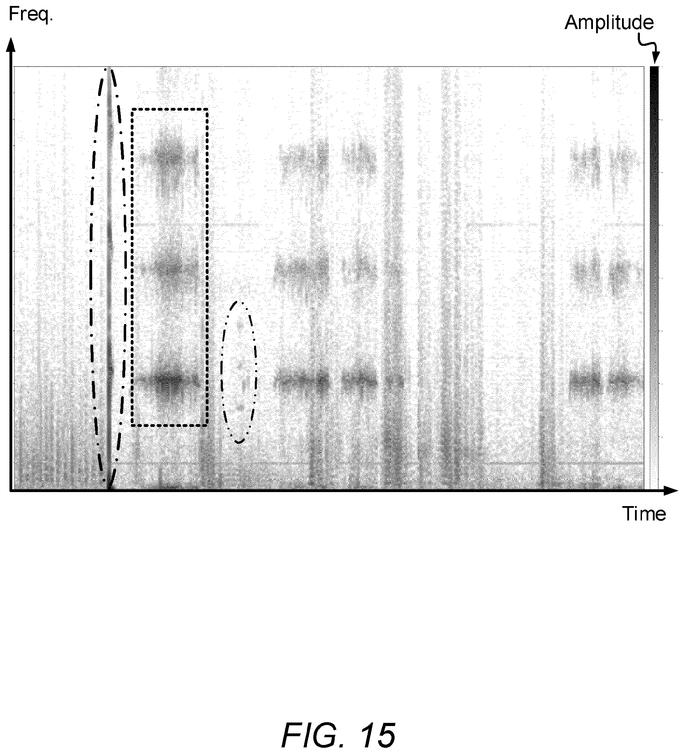

FIG. 15 shows an example of a power spectrogram based on acquired measurements indicative of electric field strength. The spectrogram was produced by a processing of measurements indicative of electric field strength as described above in connection with fig. 12.

The spectrogram shows at least three insect signatures, where the signature in the dotted box is known to be caused by a bee, while the one or more signatures in the dash-dotted oval and the one or more signatures in the dot-dot-dash oval is caused by one or more, as yet, unknown insects.

The power spectrogram illustrates how insect signatures may be characterised and distinguished by the difference in the frequency bandwidth of their respective signals. Where the bee causes a signal having a relatively medium bandwidth, the signal in the dash-dotted oval appears to have a relatively large bandwidth and the signal in the dot-dot-dash oval a relatively short one.

Further, fig. 15 illustrates how insect signatures may be characterized and distinguished by the harmonics in the signal. For example by one or more of: the presence of harmonics, i.e. which harmonics are seen in the spectrogram and which are not, and/or absolute or relative energy of a fundamental frequency and/or one or more harmonics, and/or absolute or relative amplitude of a fundamental frequency and/or one or more harmonics.

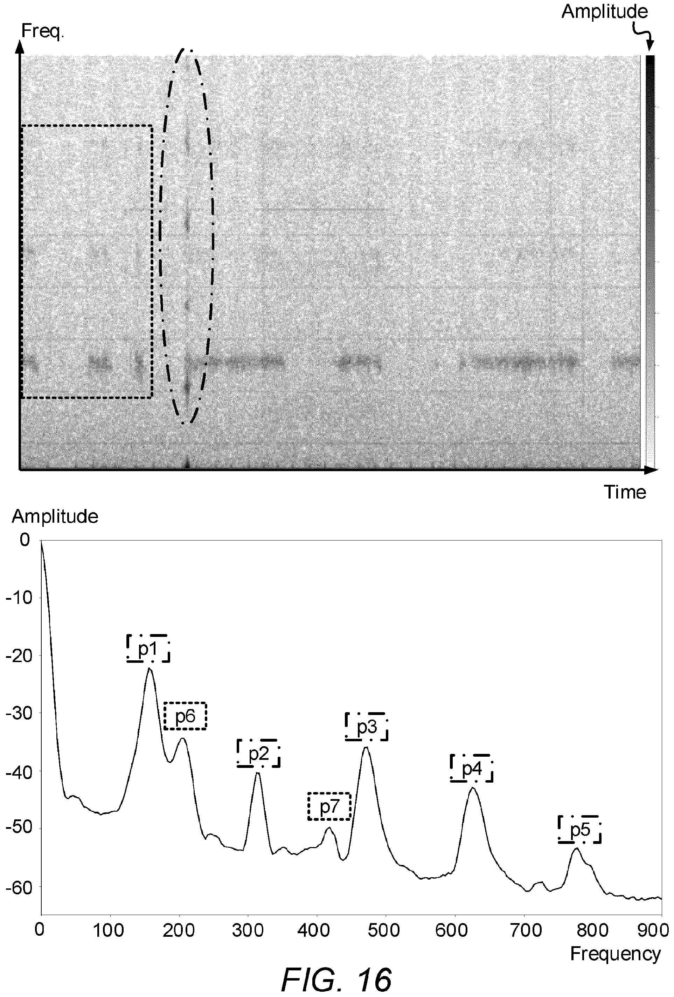

FIG. 16 shows an example of a power spectrogram based on acquired measurements indicative of electric field strength. The spectrogram was produced by a processing of measurements indicative of electric field strength as described above in connection with fig. 12.

The spectrogram shows at least two insect signatures, where the signature in the dotted box is known to be caused by a bee, while the one or more signatures in the dash-dotted oval is caused by one or more, as yet, unknown insects.

The power spectrogram illustrates how insect signatures may be characterised and distinguished by the difference in the relative amplitude, and/or bandwidth, and/or energy of the fundamental frequency and harmonics of their respective signals. The bee signature has less energy the higher the harmonics, whereas the signature in the dash-dotted oval appears to have relatively more energy in the harmonics than the bee signature, the second harmonic appears to have less energy than the third and fourth harmonic, and more harmonics are visible in the spectrogram.

In the bottom half of figure 16 is shown a spectrum based on the same measurements as those processed to create the power spectrogram above. In the spectrum, the peaks in amplitude around specific frequencies are clearly visible. Seven peaks have been marked with p1 to p7 and with a dash-dotted or dotted line around their reference to show which signature in the spectrogram above they are each associated with.

The peaks marked p1 - p5 are associated with the peaks in frequency caused by the unknown insect and have their maximum around, respectively, 157 Hz, 314 Hz, 471 Hz, 628 Hz, and 785 Hz. Thus, the fundamental frequency p1, or first harmonic, is at around 157 Hz, while also at least the second harmonic p2 at around 314 Hz, the third harmonic p3 at around 471 Hz, the fourth harmonic p4 at around 628 Hz, and the fifth harmonic p5 at around 785 Hz are visible in the spectrum. The second harmonic p2 at around 314 Hz is also seen to be smaller in amplitude than the third harmonic p3, while the remaining harmonics in the signature of the unknown insect decrease in amplitude with increasing level of the harmonic.

The peaks marked p6 and p7 are associated with the peaks in frequency caused by a bee and have their maximum around, respectively, 205 Hz and 410 Hz, with the fundamental frequency p6 of the bee signature being at around 205 Hz and the second harmonics at around 410 Hz. The third harmonic at around 615 Hz is barely visible in the power spectrogram and not visible in the spectrum, where it may be hidden by the much stronger fourth harmonic of the unknown insect.

Thus, a bee and the as yet unidentified insect are easily distinguished by their effect on the electric field sensor which acquired the time-dependent measurements that were used to provide the frequency-resolved data resulting in the power spectrogram and spectrum shown in fig. 16.

### LIST OF REFERENCES

- 1: Insect sensor system
- 7: E-field sensor
- 9: Housing
- 10: Measurement area(s)
- 10A: First measurement area
- 10B: Second measurement area
- 11: Flying insect
- 12: Perched insect
- 13: Crop/plant
- 14: Electric field generator
- 15: Ground
- 16: Generator rod
- 17: Propulsion mechanism
- 18: Electric field lines (artistic)
- 19: Sensor unit
- 20: Surface
- 22: Modulation of electric field (artistic)
- 24: Normal vector
- 30: Local data processing system
- 31: Input line
- 32: Filter
- 33: High impedance amplifier/High imp. differential ampl./Instrumentation ampl.
- 35: Amplifier (AMP)
- 37: A/D converter
- 39: Data processor
- 41: Data storage
- 43: Digital data recorder
- 45: Digital audio recorder
- 47: Communications interface
- 49: Multiplexer
- 51: Central receiver
- 53: Antenna node
- 200: Data processing system
- 220: Output interface
- 230: Data storage device
- 270: Data communications interface
- 271: Antenna

- D: Distance between sensor modules and/or electric field sensors

## Claims

1. A computer-implemented method for classification of insects, the method comprising the steps:
- receiving acquired time-dependent measurements indicative of electric field strength from one or more electric field sensors (7),
- processing the time-dependent electric field strength measurements from the one or more electric field sensors (7) to provide frequency-resolved data, and
- classifying one or more insects based at least in part on the frequency-resolved data.

2. The computer-implemented method for classification of insects according to claim 1, wherein the step of classifying further comprising feeding the frequency-resolved data and/or one or more signal embeddings derived from the frequency-resolved data into a classification model, the classification model being configured to classify the frequency-resolved data and/or the one or more signal embeddings into an indication of an insect class associated with the frequency-resolved data and/or the one or more signal embeddings.

3. The computer-implemented method for classification of insects according to claim 2, wherein the classification model comprises a trained machine-learning model, in particular a trained neural network model, trained to derive an indication of an insect class associated from received frequency-resolved data and/or received one or more signal embeddings.

4. The computer-implemented method for classification of insects according to any of claims 2 or 3, wherein the step of classifying further comprises extracting one or more signal embeddings from the frequency-resolved data and to feed the extracted signal embeddings into the classification model.

5. The computer-implemented method for classification of insects according to any of the preceding claims, the method further comprising:
- determining a representation of a distribution of signal power into frequency components, such as a power spectrum or a power spectrogram, based on the frequency-resolved data, and
wherein the classification is based at least in part on the determined representation.

6. The computer-implemented method for classification of insects according to any of the preceding claims, the method further comprising:
- determining one or more frequency-domain characteristics, such as one or more spectral peaks, based on the frequency-resolved data, and
wherein the classification is based at least in part on the determined one or more frequency-domain characteristics.

7. The computer-implemented method for classification of insects according to claim 6, wherein determining one or more frequency-domain characteristics comprises determining one or more spectral peaks, and/or number of spectral peaks, and/or a measure of a temporal variation of a determined frequency-domain characteristic.

8. The computer-implemented method for classification of insects according to claim 7, wherein determining one or more spectral peaks further comprises determining a measure of a shape and/or size and/or strength of a determined spectral peak.

9. The computer-implemented method for classification of insects according to claim 8, wherein determining one or more spectral peaks, and/or determining a measure of a shape and/or size and/or strength of a determined spectral peak comprises determining one or more of: peak amplitude, peak frequency, peak width, peak shape, and/or peak area.

10. The computer-implemented method for classification of insects according to any of the preceding claims, the method further comprising:
- determining one or more fundamental frequencies and/or one or more harmonics of a temporal modulation of the measured electric field strength based on the frequency-resolved data, and
wherein the classification is based at least in part on the determined one or more fundamental frequencies and/or determined one or more harmonics.

11. The computer-implemented method for classification of insects according to any of the preceding claims, the method further comprising:
- determining one or more of the following frequency-domain features:
- absolute or relative energy of a fundamental frequency and/or of one or more harmonics,
- absolute or relative amplitude of a fundamental frequency and/or of one or more harmonics,
- absolute or relative bandwidth of a fundamental frequency and/or of one or more harmonics, and
wherein the classification is based at least in part on the determined one or more frequency-domain features.

12. An insect sensor system (1) for classification of insects, the insect sensor system comprising:
- one or more electric field sensors (7) each configured to being sensitive to the electric field in a respective measurement area and each configured to acquire time-dependent measurements indicative of electric field strength,
- a data processing system (200) configured to process the time-dependent measurements from the one or more electric field sensors (7) to provide frequency-resolved data,
wherein the data processing system is further configured to classify one or more insects based at least in part on the frequency-resolved data.

13. The insect sensor system (1) according to claim 12, wherein the data processing system (200) is configured to perform the steps of the method according to any of the claims 1-11.

14. A data processing system (200) configured to perform the steps of the computer-implemented method according to any of the claims 1-11.

15. A computer program comprising code adapted to cause, when executed by the data processing system (200) of claim 14, the data processing system (200) to perform computer-implemented steps according to any of claims 1-11.

## Patentansprüche

1. Computerimplementiertes Verfahren zur Klassifizierung von Insekten, wobei das Verfahren die folgenden Schritte umfasst:
- Empfangen von erfassten zeitabhängigen Messwerten, die auf die elektrische Feldstärke hinweisen, von einem oder mehreren elektrischen Feldsensoren (7),
- Verarbeiten der zeitabhängigen elektrischen Feldstärkemesswerte von dem einen oder den mehreren elektrischen Feldsensoren (7) zur Bereitstellung frequenzaufgelöster Daten, und
- Klassifizieren eines oder mehrerer Insekten zumindest teilweise auf der Grundlage der frequenzaufgelösten Daten.

2. Computergestütztes Verfahren zur Klassifizierung von Insekten nach Anspruch 1, wobei der Klassifizierungsschritt weiter das Einspeisen der frequenzaufgelösten Daten und/oder einer oder mehrerer aus den frequenzaufgelösten Daten abgeleiteten Signaleinbettungen in ein Klassifizierungsmodell umfasst, wobei das Klassifizierungsmodell so konfiguriert ist, dass es die frequenzaufgelösten Daten und/oder die eine oder die mehreren Signaleinbettungen in einen Hinweis auf eine Insektenklasse klassifiziert, die den frequenzaufgelösten Daten und/oder der einen oder den mehreren Signaleinbettungen zugeordnet ist.

3. Computergestütztes Verfahren zur Klassifizierung von Insekten nach Anspruch 2, wobei das Klassifizierungsmodell ein trainiertes Modell des maschinellen Lernens, insbesondere ein trainiertes neuronales Netzwerkmodell, umfasst, das darauf trainiert ist, aus empfangenen frequenzaufgelösten Daten und einer oder mehreren empfangenen Signaleinbettungen einen Hinweis auf eine zugeordnete Insektenklasse abzuleiten.

4. Computergestütztes Verfahren zur Klassifizierung von Insekten nach einem der Ansprüche 2 oder 3, wobei der Klassifizierungsschritt weiter das Extrahieren einer oder mehrerer Signaleinbettungen aus den frequenzaufgelösten Daten und das Einspeisen der extrahierten Signaleinbettungen in das Klassifizierungsmodell umfasst.

5. Computergestütztes Verfahren zur Klassifizierung von Insekten nach einem der vorstehenden Ansprüche, wobei das Verfahren weiter Folgendes umfasst:
- Bestimmen einer Darstellung der Verteilung der Signalleistung in Frequenzkomponenten, wie beispielsweise eines Leistungsspektrums oder eines Leistungsspektrogramms, basierend auf den frequenzaufgelösten Daten, und
wobei die Klassifizierung zumindest teilweise auf der bestimmten Darstellung basiert.

6. Computergestütztes Verfahren zur Klassifizierung von Insekten nach einem der vorstehenden Ansprüche, wobei das Verfahren weiter Folgendes umfasst:
- Bestimmen einer oder mehrerer Frequenzbereichseigenschaften, wie beispielsweise eines oder mehrerer Spektralspitzen, basierend auf den frequenzaufgelösten Daten, und
wobei die Klassifizierung zumindest teilweise auf der einen oder den mehreren bestimmten Frequenzbereichseigenschaften basiert.

7. Computergestütztes Verfahren zur Klassifizierung von Insekten nach Anspruch 6, wobei das Bestimmen einer oder mehrerer Frequenzbereichseigenschaften das Bestimmen einer oder mehrerer Spektralspitzen und/oder einer Anzahl der Spektralspitzen und/oder eines Maßes für die zeitliche Variation einer bestimmten Frequenzbereichseigenschaft umfasst.

8. Computergestütztes Verfahren zur Klassifizierung von Insekten nach Anspruch 7, wobei das Bestimmen einer oder mehrerer Spektralspitzen weiter das Bestimmen eines Maßes einer Form und/oder Größe und/oder Stärke einer bestimmten Spektralspitze umfasst.

9. Computergestütztes Verfahren zur Klassifizierung von Insekten nach Anspruch 8, wobei das Bestimmen einer oder mehrerer Spektralspitze und/oder das Bestimmen eines Maßes einer Form und/oder Größe und/oder Stärke einer bestimmten Spektralspitze das Bestimmen eines oder mehrerer der Folgenden umfasst: Spitzenamplitude, Spitzenfrequenz, Spitzenbreite, Spitzenform und/oder Spitzenbereich.

10. Computergestütztes Verfahren zur Klassifizierung von Insekten nach einem der vorstehenden Ansprüche, wobei das Verfahren weiter Folgendes umfasst:
- Bestimmen einer oder mehrerer Grundfrequenzen und/oder einer oder mehrerer Harmonischen einer zeitlichen Modulation der gemessenen elektrischen Feldstärke basierend auf den frequenzaufgelösten Daten, und
wobei die Klassifizierung zumindest teilweise auf der einen oder den mehreren bestimmten Grundfrequenzen und/oder einen oder mehreren bestimmten Harmonischen basiert.

11. Computergestütztes Verfahren zur Klassifizierung von Insekten nach einem der vorstehenden Ansprüche, wobei das Verfahren weiter Folgendes umfasst:
- Bestimmen eines oder mehrerer der folgenden Merkmale im Frequenzbereich:
- absolute oder relative Energie einer Grundfrequenz und/oder von einer oder mehreren Harmonischen,
- absolute oder relative Amplitude einer Grundfrequenz und/oder von einer oder mehreren Harmonischen,
- absolute oder relative Bandbreite einer Grundfrequenz und/oder von einer oder mehreren Harmonischen und
wobei die Klassifizierung zumindest teilweise auf dem einen oder den mehreren bestimmten Merkmalen im Frequenzbereich basiert.

12. Insektensensorsystem (1) zur Klassifizierung von Insekten, wobei das Insektensensorsystem Folgendes umfasst:
- einen oder mehrere elektrische Feldsensoren (7), die jeweils so konfiguriert sind, dass sie auf das elektrische Feld in einem entsprechenden Messbereich reagieren, und jeweils so konfiguriert sind, dass sie zeitabhängige Messwerte erfassen, die einen Hinweis auf die elektrische Feldstärke geben,
- ein Datenverarbeitungssystem (200), das so konfiguriert ist, dass es die zeitabhängigen Messwerte von dem einen oder den mehreren elektrischen Feldsensoren (7) verarbeitet, um frequenzaufgelöste Daten bereitzustellen,
wobei das Datenverarbeitungssystem weiter so konfiguriert ist, dass es ein oder mehrere Insekten zumindest teilweise auf der Grundlage der frequenzaufgelösten Daten klassifiziert.

13. Insektensensorsystem (1) nach Anspruch 12, wobei das Datenverarbeitungssystem (200) so konfiguriert ist, dass es die Schritte des Verfahrens nach einem der Ansprüche 1-11 durchführt.

14. Datenverarbeitungssystem (200), das so konfiguriert ist, dass es die Schritte des computerimplementierten Verfahrens nach einem der Ansprüche 1-11 durchführt.

15. Computerprogramm, das Code umfasst, der geeignet ist, bei Ausführung durch das Datenverarbeitungssystem (200) nach Anspruch 14 das Datenverarbeitungssystem (200) zu veranlassen, computerimplementierte Schritte nach einem der Ansprüche 1-11 durchzuführen.

## Revendications

1. Procédé mis en œuvre par ordinateur pour la classification d'insectes, le procédé comprenant les étapes consistant à :
- recevoir des mesures acquises dépendantes du temps indicatives d'une intensité de champ électrique, en provenance d'un ou plusieurs capteurs de champ électrique (7),
- traiter les mesures d'intensité de champ électrique dépendantes du temps en provenance des un ou plusieurs capteurs de champ électrique (7) afin de fournir des données résolues en fréquence, et
- classifier un ou plusieurs insectes en se basant au moins en partie sur les données résolues en fréquence.

2. Procédé mis en œuvre par ordinateur pour la classification d'insectes selon la revendication 1, dans lequel l'étape de classification comprend en outre l'alimentation des données résolues en fréquence et/ou d'un ou de plusieurs plongements de signal dérivés des données résolues en fréquence dans un modèle de classification, le modèle de classification étant configuré pour classifier les données résolues en fréquence et/ou les un ou plusieurs plongements de signal dans une indication d'une classe d'insectes associée aux données résolues en fréquence et/ou aux un ou plusieurs plongements de signal.

3. Procédé mis en œuvre par ordinateur pour la classification d'insectes selon la revendication 2, dans lequel le modèle de classification comprend un modèle d'apprentissage automatique entraîné, en particulier un modèle de réseau neuronal entraîné, qui est entraîné à déduire une indication d'une classe d'insecte associée aux données résolues en fréquence reçues et/ou aux un ou plusieurs plongements de signal reçus.

4. Procédé mis en œuvre par ordinateur pour la classification d'insectes selon l'une quelconque des revendications 2 ou 3, dans lequel l'étape de classification comprend en outre l'extraction d'un ou de plusieurs plongements de signal à partir des données résolues en fréquence et à alimenter des plongements de signal extraits dans le modèle de classification.

5. Procédé mis en œuvre par ordinateur pour la classification d'insectes selon l'une quelconque des revendications précédentes, le procédé comprenant en outre :
- la détermination d'une représentation d'une distribution d'une puissance de signal en composantes fréquentielles, telle qu'un spectre de puissance ou un spectrogramme de puissance, à partir des données résolues en fréquence, et
dans lequel la classification est basée au moins en partie sur la représentation déterminée.

6. Procédé mis en œuvre par ordinateur pour la classification d'insectes selon l'une quelconque des revendications précédentes, le procédé comprenant en outre :
- la détermination d'une ou de plusieurs caractéristiques de domaine fréquentiel, telles qu'un ou plusieurs pics spectraux, sur la base des données résolues en fréquence, et
dans lequel la classification est basée au moins en partie sur les une ou plusieurs caractéristiques de domaine fréquentiel déterminées.

7. Procédé mis en œuvre par ordinateur pour la classification d'insectes selon la revendication 6, dans lequel la détermination d'une ou plusieurs caractéristiques de domaine fréquentiel comprend une détermination d'un ou plusieurs pics spectraux, et/ou d'un nombre de pics spectraux, et/ou une mesure d'une variation temporelle d'une caractéristique de domaine fréquentiel déterminée.

8. Procédé mis en œuvre par ordinateur pour la classification d'insectes selon la revendication 7, dans lequel la détermination d'un ou plusieurs pics spectraux comprend en outre une détermination d'une mesure de forme et/ou de taille et/ou d'intensité d'un pic spectral déterminé.

9. Procédé mis en œuvre par ordinateur pour la classification d'insectes selon la revendication 8, dans lequel la détermination d'un ou plusieurs pics spectraux, et/ou la détermination d'une mesure d'une forme et/ou d'une taille et/ou d'une intensité d'un pic spectral déterminé comprend une détermination d'une ou plusieurs parmi : une amplitude de pic, une fréquence de pic, une largeur de pic, une forme de pic, et/ou une aire de pic.

10. Procédé mis en œuvre par ordinateur pour la classification d'insectes selon l'une quelconque des revendications précédentes, le procédé comprenant en outre :
- la détermination d'une ou de plusieurs fréquences fondamentales et/ou d'une ou de plusieurs harmoniques d'une modulation temporelle de l'intensité de champ électrique mesurée, sur la base des données résolues en fréquence, et
dans lequel la classification repose au moins en partie sur les une ou plusieurs fréquences fondamentales déterminées et/ou les une ou plusieurs harmoniques déterminées.

11. Procédé mis en œuvre par ordinateur pour la classification d'insectes selon l'une quelconque des revendications précédentes, le procédé comprenant en outre :
- la détermination d'une ou de plusieurs des caractéristiques de domaine fréquentiel suivantes :
- énergie absolue ou relative d'une fréquence fondamentale et/ou d'une ou plusieurs harmoniques,
- amplitude absolue ou relative d'une fréquence fondamentale et/ou d'une ou plusieurs harmoniques,
- bande passante absolue ou relative d'une fréquence fondamentale et/ou d'une ou plusieurs harmoniques, et
dans lequel la classification est basée au moins en partie sur les une ou plusieurs caractéristiques de domaine fréquentiel déterminées.

12. Système de détection d'insectes (1) pour la classification d'insectes, le système de détection d'insectes comprenant :
- un ou plusieurs capteurs de champ électrique (7) configurés chacun pour être sensible au champ électrique dans une aire de mesure respective et configurés chacun pour acquérir des mesures dépendantes du temps indicatives de l'intensité de champ électrique,
- un système de traitement de données (200) configuré pour traiter les mesures dépendantes du temps en provenance des un ou plusieurs capteurs de champ électrique (7) afin de fournir des données résolues en fréquence,
dans lequel le système de traitement des données est en outre configuré pour classifier un ou plusieurs insectes sur la base au moins en partie des données résolues en fréquence.

13. Système de détection d'insectes (1) selon la revendication 12, dans lequel le système de traitement de données (200) est configuré pour effectuer les étapes du procédé selon l'une quelconque des revendications 1-11.

14. Système de traitement de données (200) configuré pour effectuer les étapes du procédé mis en œuvre par ordinateur selon l'une quelconque des revendications 1-11.

15. Programme informatique comprenant un code adapté pour amener, lorsqu'il est exécuté par le système de traitement de données (200) de la revendication 14, le système de traitement de données (200) à effectuer des étapes mises en œuvre par ordinateur selon l'une quelconque des revendications 1-11.
